(19) Europäisches Patentamt
European Patent Office
Office européen des brevets

(11) EP 2 612 890 A1

(12) **EUROPEAN PATENT APPLICATION**
published in accordance with Art. 153(4) EPC

(43) Date of publication:
**10.07.2013 Bulletin 2013/28**

(21) Application number: **10856705.8**

(22) Date of filing: **02.09.2010**

(51) Int Cl.:
***C09D 4/00*** *(2006.01)*
***B32B 21/08*** *(2006.01)*
***B32B 27/36*** *(2006.01)*
***C09D 7/12*** *(2006.01)*
***E04F 15/12*** *(2006.01)*
***B32B 13/12*** *(2006.01)*
***B32B 27/30*** *(2006.01)*
***C09D 5/24*** *(2006.01)*
***C09D 167/07*** *(2006.01)*

(86) International application number:
**PCT/JP2010/065028**

(87) International publication number:
**WO 2012/029155 (08.03.2012 Gazette 2012/10)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(71) Applicants:
- **Riken Technos Corp.**
  **Chuo-ku**
  **Tokyo 103-8438 (JP)**
- **BASF SE**
  **67056 Ludwigshafen (DE)**

(72) Inventors:
- **TASAKA, Michihisa**
  **Kawasaki-city**
  **Kanagawa 215-0001 (JP)**
- **KANNO, Hiroyasu**
  **Tokyo 175-0094 (JP)**

(74) Representative: **Wilson, Justin Scott**
**Withers & Rogers LLP**
**4 More London Riverside**
**London SE1 2AU (GB)**

(54) **COATING FOR FLOORING MATERIALS AND FLOORING MATERIAL**

(57) A floor coating material of the present invention contains (a) 20 to 40 % by mass of a vinyl ester resin or an unsaturated polyester resin; (b) 50 to 70 % by mass of a vinyl monomer and/or a (meth) acrylate monomer; (c) 1 to 20 % bey mass of a modifying agent (provided that the total amount of the components (a) to (c) is 100 % by mass); and (d) 0.1 to 15 parts by mass of at least one radical polymerization initiator selected from the group consisting of organic peroxides, UV initiators and electron-beam initiators, with respect to 100 parts by mass of the total amount of the components (a) to (c).



Printed by Jouve, 75001 PARIS (FR)

## Description

Technical Field

The present invention relates to floor coating materials and floorings, and more particularly, to floor coating materials and floorings that exhibit good adhesion to floor base layers for floors such as concrete floors, resin-coated concrete floors, wooden floors or resin-coated wooden floors, and that impart to such layers superior water-resistance, wear-resistance, transparency, surface smoothness, flexibility, impact-resistance (and optionally, antistatic property), without worsening working conditions.

Background Art

Conventionally, coating materials such as epoxy-based, urethane-based, polyester-based and acryl-based coating materials have often been used to coat concrete, wood and other floor base materials to provide them with a design, solvent-resistance, chemical-resistance and aesthetic appearance.
For example, the following patent document 1 discloses a floor-finishing method involving directly coating on a concrete surface a coating material that contains an acryl silicon resin, a curing agent or a curing catalyst, a pigment and a solvent, and that has predetermined permeability to water vapor. Also, the patent document 2 discloses a curable composition for floor coating that is composed of a copolymer component and a curing catalyst component. The copolymer component has a backbone essentially formed of a vinyl polymer and has hydrolysable silicon groups and amino groups in its molecules.
However, currently known floor coating materials, including the conventional coating materials described in the patent documents 1 and 2 above, do not exhibit sufficient adhesion to floor base layers for floors such as concrete floors, resin-coated concrete floors, wooden floors or resin-coated wooden floors, nor does any of them provide water-resistance, wear-resistance, transparency, surface smoothness, flexibility and impact-resistance in a well-balanced manner. Another disadvantage of the conventional floor coating materials is that xylene- or toluene-based solvents used in these coating materials tend to worsen working conditions.

Prior Art Documents

Patent Documents

Patent Document 1: Japanese Patent Application Laid-Open No. 2000-256612
Patent Document 2: Japanese Patent Application Laid-Open No. 2002-363485

Summary of Invention

Problems to be Solved by the Invention

Accordingly, an object of the present invention is to provide a floor coating material and a flooring that exhibit good adhesion to floor base layers of a variety of floors, such as concrete floors, resin-coated concrete floors, wooden floors or resin-coated wooden floors, and that impart to such layers superior water-resistance, wear-resistance, transparency, surface smoothness, flexibility, impact-resistance (and optionally, antistatic property), without worsening working conditions.

Means for Solving the Problem

Over the course of extensive studies, the present inventor has found that a coating material containing the components (a), (b), (c) and (d) described below in specific quantitative relations can provide solutions to the above-identified problems to complete the present invention.
Accordingly, the present invention is as follows:

1. A floor coating material, comprising:

(a) 20 to 40 % by mass of a vinyl ester resin or an unsaturated polyester resin;
(b) 50 to 70 % by mass of a vinyl monomer and/or a (meth)acrylate monomer;

(c) 1 to 20 % by mass of a modifying agent (provided that the total amount of the components (a) to (c) is 100 % by mass); and
(d) 0.1 to 15 parts by mass of at least one radical polymerization initiator selected from the group consisting of organic peroxides, UV initiators and electron-beam initiators, with respect to 100 parts by mass of the total amount of the components (a) to (c).

2. The floor coating material according to item 1, wherein the component (a) comprises at least one selected from the group consisting of urethane (meth) acrylate, polyester (meth) acrylate and epoxy(meth)acrylate.

3. The floor coating material according to item 1 or 2, wherein the component (b) comprises at least one monomer selected from (b-1) a compound having a cyclic structure and having a single ethylenic unsaturated group; (b-2) a diacrylate compound; and (b-3) a triacrylate compound.

4. The floor coating material according to any of items 1 to 3, wherein the component (c) comprises at least one selected from the group consisting of (c-1) a polyol having a hydroxyl value of 40 to 330 mg KOH/g; (c-2) a polyol having a hydroxyl value of 40 to 330 mg KOH/g and an acid value of 2 to 20 mg KOH/g; (c-3) a modified rubber; and (c-4) a compound having an epoxy equivalent of 150 to 700 g/mol.

5. The floor coating material according to item 4, wherein the component (c-1) comprises at least one selected from the group consisting of (c-1-1) a castor oil-based polyol having a hydroxyl value of 40 to 330 mg KOH; (c-1-2) a polybutadiene-based polyol having a hydroxyl value of 40 to 330 mg KOH/g; and (c-1-3) a polyisoprene-based polyol having a hydroxyl value of 40 to 330 mg KOH/g or a hydrogenated product thereof.

6. The floor coating material according to item 5, wherein the component (c-1) comprises (c-1-1-1) an aromatic castor oil-based polyol having a hydroxyl value of 40 to 330 mg KOH/g.

7. The floor coating material according to item 4, wherein the component (c-2) comprises (c-2-1) a castor oil-based polyol having a hydroxyl value of 40 to 330 mg KOH/g and an acid value of 2 to 20 mg KOH/g.

8. The floor coating material according to item 4, wherein the component (c-3) comprises an acid-modified polybutadiene or an acid-modified polyisoprene.

9. The floor coating material according to item 4, wherein the component (c-4) comprises (c-4-1) a polyepoxy compound having an epoxy equivalent of 150 to 250 g/mol.

10. The floor coating material according to item 4, wherein the component (c-4) comprises (c-4-2) a polymer with a saturated backbone having an epoxy equivalent of 500 to 700 g/mol.

11. The floor coating material according to any of items 1 to 10, further comprising (e) an antistatic material.

12. The floor coating material according to item 11, wherein the antistatic material (e) comprises (e-1) an ionic liquid, wherein the ionic liquid (e-1) is added in an amount of 0.5 to 10.0 parts by mass with respect to 100 parts by mass of the total amount of the component (a) to (c).

13. The floor coating material according to item 12, wherein the ionic liquid (e-1) comprises at least one cation selected from the group consisting of imidazolium, pyridinium, pyrrolidinium, phosphonium, ammonium and sulfonium.

14. The floor coating material according to item 13, wherein the ionic liquid (e-1) comprises an anion selected from the group consisting of halogens, carboxylates, sulfates, sulfonates, thiocyanates, aluminates, borates, phosphates, phosphinates, amides, antimonates, imides and methides.

15. The floor coating material according to any of items 12 to 14, further comprising (f) an antistatic improver, wherein the antistatic improver (f) comprises at least one selected from the group consisting of (f-1) an acidic phosphate; (f-2) a carbodiimide compound; and (f-3) a vinyl ether-based compound and is added in an amount in the range of 0.02 to 30 parts by mass with respect to one part by mass of the ionic liquid (e-1).

16. The floor coating material according to any of the items 1 to 15, wherein the flooring to be coated with the coating

material comprises a concrete floor, a resin-coated concrete floor, a wooden floor or a resin-coated wooden floor.

17. A flooring formed of a coating layer (A) placed adjacent to a floor base layer (B), wherein the coating layer (A) comprises:

(a) 20 to 40 % by mass of a vinyl ester resin or an unsaturated polyester resin;
(b) 50 to 70 % by mass of a vinyl monomer and/or a (meth)acrylate monomer;
(c) 1 to 20 % by mass of a modifying agent (provided that the total amount of the components (a) to (c) is 100 % by mass); and
(d) 0.1 to 15 parts by mass of at least one radical polymerization initiator selected from the group consisting of organic peroxides, UV initiators and electron-beam initiators, with respect to 100 parts by mass of the total amount of the components (a) to (c), and

wherein the floor base layer (B) comprises a concrete floor, a resin-coated concrete floor, a wooden floor or a resin-coated wooden floor.

18. The flooring according to item 17, wherein the coating layer (A) has a thickness of 20 to 1,000 μm.

19. The flooring according to item 17 or 18, wherein the coating layer (A) further comprises (e) an antistatic material.

20. The flooring according to item 19, wherein the antistatic material (e) comprises (e-1) an ionic liquid, wherein the ionic liquid (e-1) is added in an amount of 0.5 to 10.0 parts by mass with respect to 100 parts by mass of the total amount of the component (a) to (c).

21. The flooring according to item 20, wherein the ionic liquid (e-1) comprises at least one cation selected from the group consisting of imidazolium, pyridinium, pyrrolidinium, phosphonium, ammonium and sulfonium.

22. The flooring according to item 21, wherein the ionic liquid (e-1) comprises an anion selected from the group consisting of halogens, carboxylates, sulfates, sulfonates, thiocyanates, aluminates, borates, phosphates, phosphinates, amides, antimonates, imides and methides.

23. The flooring according to any of items 20 to 22, wherein further comprising an antistatic improver (f), wherein the antistatic improver (f) comprises at least one selected from the group consisting of (f-1) an acidic phosphate; and (f-2) a carbodiimide compound, wherein the antistatic improver is added in an amount in the range of 0.02 to 30 parts by mass with respect to one part by mass of the ionic liquid (e-1).

Effects of the Invention

Since the floor coating material of the present invention contains the above-described specific components (a) to (d) in predetermined amounts, it exhibits good adhesion to floor base layers for a variety of floors, such as concrete floors, resin-coated concrete floors, wooden floors or resin-coated wooden floors, and imparts to these layers superior water-resistance, wear-resistance, transparency, surface smoothness, flexibility, impact-resistance (and optionally, antistatic property). Also, the floor coating material of the present invention has a suitable viscosity for coating and therefore does not need to be diluted with organic solvents, which helps ensure good working conditions.
Since the flooring of the present invention is formed of the above-described floor coating layer (A) that is placed adjacent to the floor base layer (B) for floors such as concrete floors, resin-coated concrete floors, wooden floors or resin-coated wooden floors, it provides high adhesion between the layers (A) and (B) (which enables direct coating without treating the layer (B), for example, by priming) and provides water-resistance, wear-resistance, transparency, surface smoothness, flexibility, impact-resistance (and optionally, antistatic property) in a well-balanced manner.

Embodiments of the Invention

The present invention will now be described in further details.

<u>Component (a): Vinyl ester resin or unsaturated polyester resin</u>

The component (a) of the coating material of the present invention is a vinyl ester resin or an unsaturated polyester resin.

Specifically, the vinyl ester resin can be selected from urethane (meth)acrylate resins, epoxy (meth)acrylate resins, polyester (meth)acrylate resins. Epoxy (meth)acrylate resins or urethane (meth)acrylate resins are particularly preferred due to their high hardness-imparting property, fast dry property, high adhesion, non-yellowing property and low viscosity-imparting property. Epoxy (meth)acrylates are also preferred components in the present invention since they can minimize the contraction of the cured coating material and can provide particularly high adhesion and water-resistance. As used herein, the term "(meth)acrylate" refers to an acrylate or a methacrylate.

The urethane (meth) acrylate resin can be obtained by reacting a polyol, a polyisocyanate and a (meth) acrylate having one or more hydroxyl groups per molecule. It contains two or more (meth)acryloyl groups per molecule.

The polyol used in the urethane (meth)acrylate resin preferably has a number average molecular weight in the range of 200 to 3,000, and more preferably in the range of 400 to 2,000.

Exemplary polyols include polyether polyols, polyester polyols, polycarbonate polyols and polybutadiene polyols. These polyols can be used either individually or in combination of two or more.

As used herein, "polyether polyol" can include polyalkylene oxides, such as polyethylene glycol, polypropylene glycol and polytetramethylene glycol, as well as polyols obtained by adding the alkylene oxides to bisphenol A and bisphenol F.

Polyester polyols are condensation polymers of dibasic acids and polyols, or ring-opened polymers of cyclic ester compounds, such as polycaprolactone. Examples of dibasic acids that can be used include phthalic acid, phthalic anhydride, halogenated phthalic anhydride, isophthalic acid, terephthalic acid, tetrahydrophthalic acid, tetrahydrophthalic anhydride, hexahydrophthalic acid, hexahydrophthalic anhydride, hexahydroterephthalic acid, hexahydroisophthalic acid, succinic acid, malonic acid, glutaric acid, adipic acid, sebacic acid, 1,12-dodecanedicarboxylic acid, 2,6-naphthalenedicarboxylic acid, 2,7-naphthalenedicarboxylic acid, 2,3-naphthalenedicarboxylic acid, 2,3-naphthalenedicarboxylic anhydride, 4,4'-biphenyldicarboxylic acid, and dialkyl esters thereof. Examples of polyols include ethylene glycol, diethylene glycol, triethylene glycol, polyethylene glycol, propylene glycol, dipropylene glycol, tripropylene glycol, polypropylene glycol, 2-methyl-1,3-propanediol, 1,3-butanediol, neopentyl glycol, hydrogenated bisphenol A, 1,4-butanediol, 1,6-hexanediol, adducts of bisphenol A with propylene oxide or ethylene oxide, 1,2,3,4-tetrahyroxybutane, glycerin, trimethylolpropane, 1,3-propanediol, 1,2-cyclohexane glycol, 1,3-cyclohexane glycol, 1,4-cyclohexane glycol, 1,4-cyclohexane dimethanol, p-xylene glycol, bicyclohexyl-4,4'-diol, 2,6-decaline glycol and 2,7-decaline glycol.

The polyisocyanate used in the urethane (meth) acrylate resin includes 2,4-TDI and isomers thereof or mixtures of isomers, MDI, HDI, IPDI, XDI, hydrogenated XDI, dicyclohexylmethane diisocyanate, tolidine diisocyanate, naphthalene diisocyanate, triphenyl methane triisocyanate. These polyisocyanates can be used either individually or in combination of two or more.

Examples of the (meth)acrylate having one or more hydroxyl groups per molecule used in the urethane (meth) acrylate resin (*i.e.*, hydroxyl-containing (meth)acrylate) include mono(meth)acrylates such as 2-hydroxyethyl (meth) acrylate, 2-hydroxypropyl (meth)acrylate, 3-hydroxybutyl (meth)acrylate, polyethylene glycol mono(meth)acrylate and polypropylene glycol mono(meth)acrylate; and poly(meth)acrylates such as tris(hydroxyethyl)isocyanuric acid di(meth) acrylate and pentaerithritol tri(meth)acrylate.

Among examples of production processes of the urethane (meth) acrylate resin are (1) a process in which the polyisocyanate is first reacted with the polyol preferably with NCO/OH ratio of 1. 3 to 2 to form a terminal isocyanate compound, which is then reacted with the hydroxyl-containing (meth)acrylate such that hydroxyl groups are present in approximately the same amount as the isocyanate groups; and (2) a process in which the polyisocyanate compound is reacted with the hydroxyl-containing (meth)acrylate with NCO/OH ratio of 2 or higher to form a compound with an isocyanate group at one end, to which the polyol is added and reacted.

The epoxy (meth) acrylate resin used as the vinyl ester resin preferably contains two or more (meth) acryloyl groups per molecule. It can be obtained by reacting an epoxy resin with an unsaturated monobasic acid in the presence of an esterification catalyst.

Examples of the epoxy resins as used herein include individual epoxy resins of the bisphenol type or novolac type or mixed resins of bisphenol-type and novolac-type epoxy resins and preferably include those that have an average epoxy equivalent in the range of 150 to 450.

Exemplary bisphenol-type epoxy resins include glycidyl ether-type epoxy resins, which can be obtained by the reaction of epichlorohydrin with bisphenol A or bisphenol F and contain substantially two or more epoxy groups pre molecule; methyl glycidyl ether-type epoxy resins, which can be obtained by the reaction of methyl epichlorohydrin with bisphenol A or bisphenol F; or epoxy resins that can be obtained by the reaction of alkylene oxide adducts of bisphenol A with epichlorohydrin or methyl epichlorohydrin. Exemplary novolac-type epoxy resins include epoxy resins that can be obtained by the reaction of phenol novolac or cresol novolac with epichlorohydrin or methyl epichlorohydrin.

Exemplary unsaturated monobasic acids used in the epoxy (meth)acrylate resin include acrylic acid, methacrylic acid, cinnamic acid, crotonic acid, monomethyl maleate, monopropyl maleate, mono(2-ethylhexyl)maleate or sorbic acid. These unsaturated monobasic acids can be used either individually or in combination of two or more. The reaction of the epoxy resin and the unsaturated monobasic acid is carried out preferably at 60 to 140°C, particularly preferably at

80 to 120°C, using an esterification catalyst.

Known catalysts can be used as the esterification catalyst as they are, including a tertiary amine, such as triethylamine, N,N-dimethylbenzylamine, N,N-dimethylaniline or diazabicyclooctane, triphenylphosphine or a diethylamine hydrochloride.

The polyester (meth)acrylate resin used as the vinyl ester resin is a saturated or unsaturated polyester containing two or more (meth) acryloyl groups per molecule. It is obtained by the reaction of a (meth)acryl compound with the terminals of a saturated or unsaturated polyester. The resin preferably has a number average molecular weight in the range of 500 to 5,000.

The saturated polyesters for use in the present invention can be obtained by the condensation reaction between an unsaturated dibasic acid and a polyol. The unsaturated polyesters can be obtained by the condensation reaction between a dibasic acid such as an $\alpha,\beta$-unsaturated dibasic acid and a polyol. In the present invention, the resins obtained by the reaction of a (meth)acryl compound with the terminals of the unsaturated polyester are included in the vinyl ester resins and are distinguished from the unsaturated polyester resins described below.

The unsaturated dibasic acid as used herein includes those compounds described above in the paragraph regarding the polyester polyols. The $\alpha,\beta$-unsaturated dibasic acid includes maleic acid, maleic anhydride, fumaric acid, itaconic acid and itaconic anhydride. The polyol also includes those compounds described above in the paragraph regarding the polyester polyols.

The (meth) acrylate compound for the polyester (meth) acrylate resin used as the vinyl ester resin includes unsaturated glycidyl compounds, various unsaturated monobasic acids such as acrylic acid or methacrylic acid, and glycidyl esters thereof. Preferably, glycidyl (meth)acrylate is used.

The unsaturated polyester resins can be obtained by carrying out condensation polymerization of an acid component and an alcohol component in a known manner. The resin can be any known thermosetting resin and is not limited to any particular resin. The acid component may be an unsaturated dibasic acid, such as maleic anhydride, maleic acid, fumaric acid and itaconic acid. If necessary, saturated dibasic acids, such as phthalic acid, phthalic anhydride, isophthalic acid, terephthalic acid, succinic acid, adipic acid and sebacic acid, as well as acids other than dibasic acids, such as benzoic acid and trimellitic acid may also be used. The alcohol component includes the polyols described above in the paragraph regarding the polyester polyols.

<u>Component (b): Vinyl monomer and/or (meth)acrylate monomer</u>

The component (b) of the coating material of the present invention is a vinyl monomer and/or (meth)acrylate monomer. Specific examples include trimethylolpropane tri(meth)acrylate, pentaerythritol tri (meth)acrylate, ethylene glycol di(meth)acrylate, tetraethylene glycol di(meth)acrylate, polyethylene glycol di(meth)acrylate, 1,4-butanediol di (meth)acrylate, 1,6-hexanediol di(meth)acrylate, neopentyl glycol di(meth)acrylate, trimethylolpropane trioxyethyl (meth) acrylate, tris(2-hydroxyethyl)isocyanurate tri(meth)acrylate, tris(2-hydroxyethyl)isocyanurate di(meth)acrylate, tricyclodecanedimethanol di(meth)acrylate.

Other examples include hydroxyethyl (meth)acrylate, 2-hydroxypropyl (meth)acrylate, 2-hydroxybutyl (meth) acrylate, methyl (meth)acrylate, ethyl (meth) acrylate, propyl (meth) acrylate, isopropyl (meth)acrylate, butyl (meth) acrylate, amyl (meth)acrylate, isobutyl (meth)acrylate, *t*-butyl (meth)acrylate, pentyl (meth)acrylate, isoamyl (meth)acrylate, hexyl (meth)acrylate, heptyl (meth)acrylate, octyl(meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, tetrahydrofurfuryl (meth)acrylate, butoxyethyl (meth)acrylate, ethoxydiethylene glycol (meth) acrylate, benzyl (meth)acrylate, cyclohexyl (meth)acrylate, phenoxyethyl(meth)acrylate, polyethylene glycol mono(meth) acrylate, polypropylene glycol mono(meth)acrylate, methoxyethylene glycol (meth)acrylate, ethoxyethoxyethyl (meth) acrylate, methoxypolyethylene glycol (meth)acrylate, methoxypolypropylene glycol (meth)acrylate, dicyclopentadiene (meth)acrylate, dicyclopentanyl (meth)acrylate, dicyclopentenyl (meth)acrylate, tricyclodecanyl (meth)acrylate, isobornyl (meth)acrylate, bornyl (meth)acrylate, diacetone (meth)acrylamide, isobutoxymethyl (meth)acrylamide, N-vinylpyrrolidone, N-vinylcaprolactam, N,N-dimethyl (meth)acrylamide, t-octyl (meth)acrylamide, dimethylaminoethyl (meth)acrylate, diethylaminoethyl (meth)acrylate, 7-amino-3,7-dimethyloctyl (meth)acrylate, N,N-diethyl (meth)acrylamide, N,N'-dimethylaminopropyl (meth)acrylamide, (meth)acryloyl morpholine; and vinyl ethers, such as hydroxybutylvinyl ether, lauryl vinyl ether, cetyl vinyl ether and 2-ethylhexyl vinyl ether.

Preferably, the vinyl monomer and/or (meth) acrylate monomer to serve as the component (b) of the coating material of the present invention is at least one monomer selected from (b-1) a compound having a cyclic structure and having a single ethylenic unsaturated group; (b-2) a diacrylate compound; and (b-3) a triacrylate compound since such compounds can provide high hardness-imparting property, fast dry property, high adhesion, non-yellowing property and low viscosity-imparting property. More preferably, the compound (b-1) is used in combination with the compound (b-2) or (b-3).

(b-1): Compound having a cyclic structure and having a single ethylenic unsaturated group

The component (b-1) for use in the present invention is a compound having a cyclic structure and having a single ethylenic unsaturated group.
Examples of the component (b) include alicyclic structure-containing (meth)acrylates, such as isobornyl (meth)acrylate, bornyl (meth)acrylate, tricyclodecanyl (meth)acrylate and dicyclopentanyl (meth)acrylate; benzyl (meth)acrylate, 4-butylcyclohexyl (meth)acrylate, acryloyl morpholine, vinyl imidazole and vinyl pyridine.
Further examples include the compounds represented by the following formula (1) to (3):
[Chemical Formula 1]

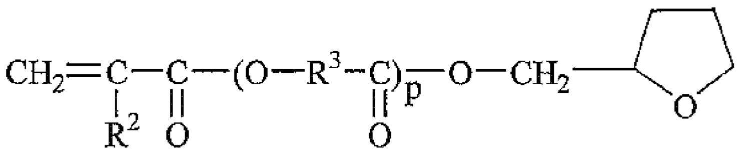

(1)

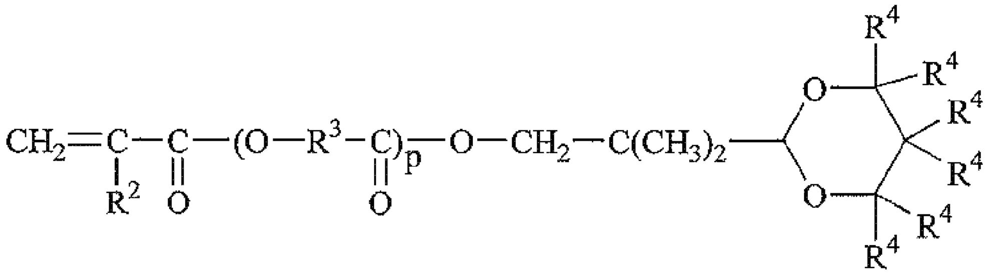

(2)

[wherein $R^2$ represents a hydrogen atom or a methyl group; $R^3$ represents an alkylene group having 2 to 8, preferably 2 to 5 carbon atoms; $R^4$ represents a hydrogen atom or a methyl group; and p preferably represents a number of 1 to 4.];
[Chemical Formula 2]

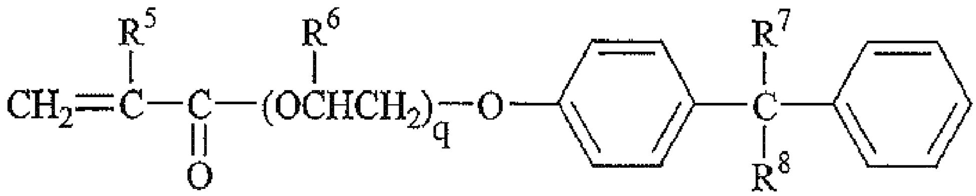

(3)

[wherein $R^5$, $R^6$, $R^7$ and $R^8$ are each independent H or $CH_3$; and q is an integer of 1 to 5.].
Further examples of the component (b) include monomers having an N-vinyl group that have high hardness-imparting property, fast dry property, high adhesion, non-yellowing property and low viscosity-imparting property. Examples of such monomers include N-vinyl pyrrolidone, N-vinyl caprolactam, N-vinyl formamide, N-vinyl imidazole and N-vinyl carbazole. Of these, N-vinyl caprolactam is particularly preferred due to its high adhesion and low viscosity-imparting property.
The component (b-2) for use in the present invention is a diacrylate monomer.
Examples of the diacrylate monomers for use in the present invention include ethylene glycol diacrylate, dipropylene glycol diacrylate(DPGDA), 1,6-hexanediol diacrylate(HDDA), 1,4-butanediol diacrylate, tetraethylene glycol diacrylate, tripropylene glycol diacrylate (TPGDA), PO-modified neopentyl glycol diacrylate, modified bisphenol A diacrylate. Dipropylene glycol diacrylate and tripropylene diacrylate are particularly preferred due to their high hardness-imparting property, fast dry property and non-yellowing property,
**[0037]** The component (b-3) for use in the present invention is a triacrylate monomer.
The component (b-3) serves to improve the balance between the hardness and the adhesion of the coating film formed of the resulting coating material.

Examples of the triacrylate monomers include triacrylate monomers resulting from the esterification of polyols with three acrylic acids, the polyols including ethylene glycol, diethylene glycol, tripropylene glycol, butylene glycol, neopentyl glycol, hexanediol, trimethylolpropane, tetramethylolpropane, pentaerythritol and dipentaerythritol.
Particularly preferred triacrylate monomers are trimethylolpropane triacrylate, tris(2-hydroxyethyl) isocyanurate triacrylate, pentaerythritol triacrylate due to their ability to provide an improved balance between the hardness and the adhesion of the coating film formed of the resulting coating material.

When the components (b-1) and (b-2) are used in combination, their respective blending proportions are 80 to 20 parts by mass, preferably 75 to 25 parts by mass for (b-1) and 20 to 80 parts by mass, preferably 25 to 75 parts by mass for (b-2), given that (b-1) + (b-2) = 100 parts by mass.

When the components (b-1) and (b-3) are used in combination, their respective blending proportions are 80 to 20 parts by mass, preferably 75 to 25 parts by mass for (b-1) and 20 to 80 parts by mass, preferably 25 to 75 parts by mass for (b-3), given that (b-1) + (b-3) = 100 parts by weight.

When cycloalkenes and alicyclic vinyl compounds are used as the component (b) in the coating composition of the present invention, they tend to make the cured coating layer (A) hard. Thus, these compounds are added for applications where a hard coating is desired; otherwise, they are preferably not added.
Examples of the cycloalkenes include cycloalkenes such as cyclobutene, cyclopentene, cycloheptene, cyclohexene, cycloheptene, 1,3-cyclohexadiene, 1,4-cyclohexadiene, 1,5-cyclooctadiene and cyclooctene. These cycloalkenes have 4 to 20 carbon atoms, for example. Other examples include dicyclopentadiene monomers. The dicyclopentadiene monomers are dicyclopentadiene or its substitution products, including alkyl-, alkylidene- and aromatic-substituted products. The substituted products may have polar groups, such as halogen, hydroxyl group, ester group, alkoxy group, cyano group, amide group, imide group and silyl group. These dicyclopentadiene monomers have 4 to 20 carbon atoms, for example. Specific examples of the dicyclopentadiene monomers include dicyclopentadiene, 2-methyldicyclopentadiene, 2-ethyldicyclopentadiene, 5-methyldicyclopentadiene, 5,5-dimethyl dicyclopentadiene and 2,3-dihydro dicyclopentadiene.
Examples of the alicyclic vinyl compounds include cycloalkene vinyl compounds and cycloalkane vinyl compounds. The cycloalkene vinyl compounds may for example include compounds having a C5 to C8 alicyclic ring with a double bond and having a polymerizable vinyl group, wherein the alicyclic ring may contain a C1 to C4 alkyl group or a halogen atom as substituents. Examples of the cycloalkene vinyl compounds include cyclopentene vinyl compounds, such as 2-vinylcyclopentene, 2-methyl-4-vinylpentene, 3-vinylcyclopentene and 3-*t*-butyl-4-vinylpentene; cyclohexene vinyl compounds, such as 4-vinylcyclohexene, 4-isopropenylvinylcyclohexene, 1-methyl-4-vinylcyclohexene, 1-methyl-4-isopropenylvinylcyclohexene, 2-methyl-4-vinylcyclohexene and 2-methyl-4-isopropenylvinylcyclohexene; cycloheptene vinyl compounds, such as 2-vinylcycloheptene, 3-vinylcycloheptene, 4-vinylcycloheptene, 3-methyl-6-vinylcycloheptene, 4-ethyl-6-vinylcycloheptene and 3-*t*-butyl-5-vinylcycloheptene; cyclooctene vinyl compounds, such as 2-vinylcyclooctene, 3-vinylcyclooctene, 4-vinylcyclooctene, 2-methyl-5-vinylcyclooctene, 4-ethyl-6-vinylcyclooctene and 3-t-butyl-7-vinylcyclooctene. These cycloalkene vinyl compounds may contain a (meth)acryloyl group as a vinyl bond.
The cycloalkane vinyl compounds may for example include compounds having a C5 to C8 saturated alicyclic ring and having a polymerizable vinyl group, wherein the alicyclic ring may contain a C1 to C4 alkyl group or a halogen atom as substituents. Examples of the cycloalkane vinyl compounds include cyclopentane vinyl compounds, such as 2-vinylcyclopentane, 2-methyl-4-vinylpentane, 3-vinylcyclopentane and 3-*t*-butyl-4-vinylpentane; cyclohexane vinyl compounds, such as 4-vinylcyclohexane, 4-isopropenylvinylcyclohexane, 1-methyl-4-vinylcyclohexane, 1-methyl-4-isopropenylvinylcyclohexane, 2-methyl-4-vinylcyclohexane and 2-methyl-4-isopropenylvinylcyclohexane; cycloheptane vinyl compounds, such as 2-vinylcycloheptane, 3-vinylcycloheptane, 4-vinylcycloheptane, 3-methyl-6-vinylcycloheptane, 4-ethyl-6-vinylcycloheptane and 3-*t*-butyl-5-vinylcycloheptane; cyclooctane vinyl compounds, such as 2-vinylcyclooctane, 3-vinylcyclooctane, 4-vinylcyclooctane, 2-methyl-5-vinylcyclooctane, 4-ethyl-6-vinylcyclooctane and 3-*t*-butyl-7-vinylcyclooctane; and cycloalkane vinyl ether compounds having a C5 to C8 saturated aliphatic ring, such as 1,4-cyclohexanedimethanol divinyl ether, cyclopentane vinyl ether, cyclohexane vinyl ether, cycloheptane vinyl ether, cyclooctane vinyl ether, 4-methylcyclohexyl vinyl ether and cyclohexylmethyl vinyl ether. These cycloalkene vinyl compounds may contain a (meth)acryloyl group as a vinyl bond.

<u>Component (c): Modifying agent</u>

The component (c) of the coating material of the present invention is a modifying agent.
The modifying agent (c) includes at least one selected from the group consisting of (c-1) a polyol having a hydroxyl value of 40 to 330 mg KOH/g; (c-2) a polyol having a hydroxyl value of 40 to 330 mg KOH/g and an acid value of 2 to 20 mg KOH/g; (c-3) a modified rubber; and (c-4) a compound having an epoxy equivalent of 150 to 700 g/mol.

(c-1) Polyol having a hydroxyl value of 40 to 330 mg KOH/g (i) will now be described.

The hydroxyl value of the component (c) contributes to improving the adhesion of the coating material of the present invention to floor base materials (which may be referred to as "specific floor base materials," hereinafter) for floors such as concrete floors, resin-coated concrete floors (for example, coated with coating materials such as epoxy-based, urethane-based, acryl-based or silicon-based coating materials), wooden floors or resin-coated wooden floors (for example, coated with coating materials such as epoxy-based, urethane-based, acryl-based or silicone-based coating materials).

While the polyol (c-1) having a hydroxyl value of 40 to 330 mg KOH/g (i) includes aromatic-based, aliphatic-based, polybutadiene-based, castor oil-based and polyisoprene-based polyols, any type of polyol that has a hydroxyl value in the above-specified range can exhibit high adhesion to the specific floor materials.

The hydroxyl value is preferably from 40 to 330 mg KOH/g (i) and more preferably from 150 to 300 mg KOH/g in terms of the above-described adhesion.

In terms of the adhesion to the specific floor base materials, the polyols (c-1) having a hydroxyl value of 40 to 330 mg KOH/g (i) are:

(c-1-1) castor oil-based polyols having a hydroxyl value of 40 to 330 mg KOH/g (i);
(c-1-2) polybutadiene-based polyols having a hydroxyl value of 40 to 330 mg KOH/g (i);
(c-1-3) polyisoprene-based polyols having a hydroxyl value of 40 to 330 mg KOH/g (i); and
(c-1-4) epoxy polyol resins having a hydroxyl value of 40 to 330 mg KOH/g (i).

In the present invention, the polyols of the components (c) may be used as a mixture of two or more polyols as necessary.

(c-1-1) Castor oil-based polyol having a hydroxyl value of 40 to 330 mg KOH/g (i) will now be described.

The above-described "castor oil" is an oil that contains the triester compound formed of ricinoleic acid and glycerin. While castor oil is typically available as a natural oil or processed natural oil, synthetic natural oils may also be used as long as they contain the above-described compound. Ricinoleic acid that composes the triester compound present in castor oil preferably composes 90 mol% or more of the fatty acids that compose the entire triester compound. The castor oil may be a processed product, such as hydrogenated product (typically hydrogenated at unsaturated bonds between carbons in the ricinoleic acid backbone). Generally, castor oil contains 90 mol% or more (including 100%) of the above-described triester compound (or in the case of hydrogenated castor oil, hydrogenated product of the triester compound) with respect to the total amount of oil.

The above-described "castor oil-based polyol" is an ester compound formed of ricinoleic acid and/or hydrogenated ricinoleic acid and a polyalcohol. As long as the castor oil-based polyol has such a composition, it may be either a polyol obtained by using castor oil as the starting material, or a polyol obtained using starting materials other than castor oil. The polyalcohol is not limited to particular polyols.

The castor oil-based polyols include polyols derived from castor oil and polyols obtained by modifying castor oil.

The polyols derived from castor oil are fatty acid ester-based polyols derived from castor oil, including polyols obtained by replacing some of the ricinoleic acid present in the glycerol ester with oleic acid, polyols obtained by esterification of ricinoleic acid obtained by saponification of castor oil with trimethylol propane or other short-chained polyols, and mixtures of these polyols and castor oil.

Examples of the polyols obtained by modifying castor oil include modified vegetable oil-based polyols and modified polyol containing an aromatic backbone (such as bisphenol A). Modified vegetable oil-based polyols can be obtained by replacing some of the ricinoleic acid present in the glycerol ester with fatty acids derived from other plants, such as linoleic acid, linolenic acid, oleic acid and other higher fatty acids derived from soybean oil, canola oil, olive oil and other vegetable oils.

Of these castor oil-based polyols, the castor oil-based polyols (c-1-1) having a hydroxyl value of 40 to 330 mg KOH/g (i) are preferred in terms of the advantages of the present invention.

Also, the aromatic-based castor oil-based polyols (c-1-1-1) having a hydroxyl value of 40 to 330 mg KOH/g (i) are preferred in terms of the advantages of the present invention (i.e., adhesion to the specific floor base materials). More preferably, the aromatic-based castor oil-based polyols have a hydroxyl value of 150 to 240 mg KOH/g is used.

The component (c-1-1-1) is a modified polyol that is derived from castor oil having an aromatic backbone (such as bisphenol A). The component (c-1-1-1) is commercially available, for example, as URIC AC series (Itoh Oil Chemicals, Co., Ltd.). Adducts formed by adding polyalkylene glycol and bisphenol A with ricinoleic acid are particularly preferred. For example, such adducts are represented by the following formula (4):

[Chemical Formula 3]

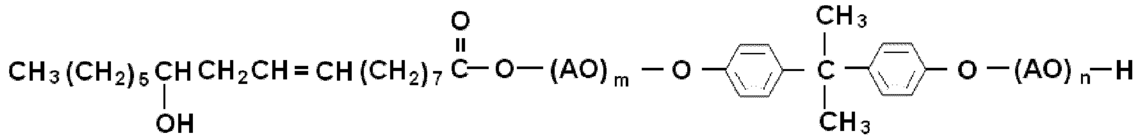

(4)

In the formula (4), m represents a number of 2 to 5 on average and n represents a number of 2 to 5 on average.

The modified polyols derived from castor oils represented by the formula (4) above are available, for example, from Itoh Oil Chemicals, Co., Ltd. under trade names of URIC AC-005 (hydroxyl value = 194 to 214 mg KOH/mg, viscosity = 700 to 1500 mPa·s/25°C), AC-006 (hydroxyl value = 168 to 187 mg KOH/mg, viscosity = 3000 to 5000 mPa·s/25°C), AC-008 (hydroxyl value = 180 mg KOH/mg, viscosity = 1600 mPa·s/25°C) and AC-009 (hydroxyl value = 225 mg KOH/mg, viscosity = 1500 mPa·s/25°C).

(c-1-2) Polybutadiene-based polyol having a hydroxyl value of 40 to 330 mg KOH/g (i) will now be described.

Examples of the polybutadiene-based polyols for use in the present invention include homopolymers such as 1,2-polybutadiene polyol and 1,4-polybutadiene polyol; copolymers such as poly(pentadiene·butadiene)polyol, poly (butadiene·styrene)polyol and poly(butadiene·acrylonitrile)polyol; and hydrogenated polybutadiene-based polyols obtained by hydrogenation of these polyols.
These polybutadiene-based polyols are commercially available, for example, from Idemitsu Kosan Co., Ltd. as Poly bd R-15HT (hydroxyl value = 102.7 mg KOH/mg, Mw1200) and Poly bd R-45HT (hydroxyl value = 46.6 mg KOH/mg, Mw2800).
Also, the polybutadiene-based polyols (c-1-2) preferably have a hydroxyl value of 40 to 330 mg KOH/g, more preferably 40 to 110 mg KOH/g, in terms of the adhesion to the specific floor base materials.
The polybutadiene-based polyols (c-1-2) preferably have a mass-average molecular weight (GPC) of 50 to 3, 000, more preferably 800 to 1,500.

(c-1-3) Polyisoprene-based polyol having a hydroxyl value of 40 to 330 mg KOH/g (i) and hydrogenated products thereof will now be described.

An example of the component (c-1-3) is Poly ip (registered trademark) (hydroxyl-terminated liquid polyisoprene) from Idemitsu Co., Ltd. Poly ip (registered trademark) (hydroxyl value = 46.6 mg KOH/mg, Mn2500) is a liquid polymer of polyisoprene-type having highly reactive hydroxyl groups at the terminals of its molecule.
An example of the hydrogenated product is EPOLE (registered trademark) (hydroxyl-terminated liquid polyolefin) from Idemitsu Co., Ltd. EPOLE (registered trademark) (hydroxyl value = 50.5 mg KOH/mg, Mn2,500) is a liquid polyolefin obtained by hydrogenation of Poly ip (registered trademark). The product has few double bonds remaining in its molecule.

(c-1-4) Epoxy polyol resin having a hydroxyl value of 40 to 330 mg KOH/g (i) will now be described.

The epoxy polyol resin (c-1-4) having a hydroxyl value of 40 to 330 mg KOH/g (i) for use in the present invention is obtained by reacting an active hydrogen compound with an epoxy resin.

Examples of the epoxy resins that can be used include polyglycidyl ether compounds of mononuclear polyhydric phenol compounds, such as hydroquinone, resorcin, pyrocatechol and phloroglucinol; polyglycidyl ether compounds of polynuclear polyhydric phenol compounds, such as dihydroxynaphthalene, biphenol, methylenebisphenol (bisphenol F), methylenebis(orthocresol), ethylidenebisphenol, isopropylidenebisphenol (biphenol A), isopropylidenebis(orthocresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfobisphenol, oxybisphenol, phenol novolac, orthocresol novolac, ethylphenol novolac, butylphenol novolac, octylphenol novolac, resorcin novolac, bisphenol A novolac, bisphenol F novolac and terpenediphenol; polyglycidyl ether compounds of ethylene oxide and/or propylene oxide adducts of the above-described mononuclear or polynuclear polyhydric phenol compounds; polyglycidyl ether compounds of hydrogenation products of the above-described mononuclear polyhydric phenol compounds; polyglycidyl ethers of polyalcohol, such as ethylene glycol, propylene glycol, butylene glycol, hexanediol, polyglycol, thiodiglycol, glycerin, trimethylolpropane, pentaerythritol, sorbitol and bisphenol A-ethylene oxide adducts; homopolymers or copolymers of glycidyl methacrylate and glycidyl esters of aliphatic, aromatic or alicyclic polybasic acids, such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid and endomethylene tetrahydrophthalic acid; epoxy compounds having a glycidylamino group, such as N,N-diglycidylaniline and bis(4-(N-methyl-N-glycidylamino)phenyl)methane; epoxidized cyclic olefin compounds, such as vinylcyclohexene diepoxide, dicyclopentanediene diepoxide, 3,4-epoxycyclohexylmethyl-3,4-epoxycyclohexanecarboxylate, 3,4-epoxy-6-methylcyclohexylmethyl-6-methylcyclohexanecarboxyla te and bis(3,4-epoxy-6-methylcyclohexylmethyl) adipate; epoxidized conjugated diene polymers, such as epoxidized polybutadiene and epoxidized styrene-butadiene copolymers; and heterocyclic compounds, such as triglycidyl isocyanurate. These epoxy resins may be internally crosslinked with an isocyanate-terminated prepolymer.

Of these epoxy resins, preferred are polyglycidyl ether compounds and other bisphenol-type epoxy resins, such as biphenol, methylenebisphenol (bisphenol F), methylenebis(orthocresol), ethylidenebisphenol (bisphenol AD), isopropylidenebisphenol (biphenol A), isopropylidenebis(orthocresol), tetrabromobisphenol A, 1,3-bis(4-hydroxycumylbenzene) and 1,4-bis (4-hydroxycumylbenzene). These epoxy resins can be used to form coating films with high adhesion and decorativeness.

The epoxy polyol resin (c-1-4) having a hydroxyl value of 40 to 330 mg KOH/g (i) is obtained by the reaction of the epoxy groups of the above-described epoxy resin with an active hydrogen compound such as a carboxylic acid compound, polyol and amino compound.

Examples of the carboxylic acid compounds include aliphatic, aromatic or alicyclic monocarboxylic acids, such as acetic acid, propionic acid, 2,2-dimethylolpropionic acid, 12-hydroxystearic acid, lactic acid, butyric acid, octilic acid, ricinoleic acid, lauric acid, benzoic acid, toluic acid, cinnamic acid, phenylacetic acid and cyclohexanecarboxylic acid, maleic acid, fumaric acid, itaconic acid, succinic acid, glutaric acid, adipic acid, dimer acid, phthalic acid, isophthalic acid, terephthalic acid, hexahydro acid and hydroxypolycarboxylic acid.

Examples of the polyols include low molecular weight polyols such as ethylene glycol, diethylene glycol, 1,2-propylene glycol, 1,3-propylene glycol, 2-methyl-1,3-propylene glycol, 2,2-dimethyl-1,3-propylene glycol, 1,2-butanediol, 1,3-butanediol, 1,4-butanediol, 1,5-pentanediol, 2,2,4-trimethyl-1,5-pentanediol, 1,6-hexanediol, 2-ethyl-1,6-hexanediol, 1,2-octanediol, 1,8-octanediol, 2-methyl-1,8-octanediol, 1,9-nonanediol, 1,10-decanediol, 1,12-octadecanediol, glycerol, trimethylolpropane and pentaerythritol.

Examples of the amino compounds include dialkylamine compounds, such as dibutylamine and dioctylamine; alkanolamine compounds, such as methylethanolamine, butylethanolamine, diethanolamine, diisopropanolamine and dimethylaminopropylethanolamine; and heterocyclic amine compounds, such as morpholine, piperidine and 4-methylpiperazine.

Of the above-described active hydrogen compounds, alkanolamine compounds such as diethanolamine are preferred.

Alternatively, compounds having two or more active hydrogen groups such as monoethanolamine and monoisopropanolamine can be used to extend the epoxy resin chain.

The reaction of the active hydrogen compound with the epoxy resin can be carried out by a common process for adding an active hydrogen compound to an epoxy resin. In one exemplary process, the epoxy resin and the active hydrogen compound are heated to 60 to 200°C in the presence of known catalysts such as tertiary amine compounds and phosphonium salts and the reaction is carried out for 3 to 10 hours.

The epoxy polyol resin (c-1-4) having a hydroxyl value of 40 to 330 mg KOH/g (i) preferably has a hydroxyl value of 100 to 140 mg KOH/g in view of the advantages of the present invention.

An example of the epoxy polyol resin (c-1-4) having a hydroxyl value of 40 to 330 mg KOH/g (i) is a EPICLON U-125-60BT (hydroxyl value = 100 to 140 mg KOH/g) manufactured by DIC Corporation.

(c-2) Polyol having a hydroxyl value of 40 to 330 mg KOH/g (i) and having an acid value of 2 to 20 mg KOH/g (ii) will now be described.

The polyol (c-2) having a hydroxyl value of 40 to 330 mg KOH/g (i) and having an acid value of 2 to 20 mg KOH/g (ii) can improve the adhesion to the specific floor base materials by satisfying the hydroxyl value condition (i) and the acid value condition (ii) whether the polyol (c-2) is an aromatic, aliphatic or castor oil-based.
The hydroxyl value of (i) is more preferably from 230 to 300 mg KOH/g.
The hydroxyl value of (ii) is more preferably from 4 to 15 mg KOH/g.

As for satisfying the conditions (i) and (ii), an example of the polyol (c-2) having a hydroxyl value of 40 to 330 mg KOH/g (i) and having an acid value or 2 to 20 mg KOH/g (ii) is a castor oil-based polyol (c-2-1) having a hydroxyl value of 40 to 330 mg KOH/g (i) and having an acid value or 2 to 20 mg KOH/g (ii).

The castor oil-based polyol (c-2-1) having a hydroxyl value of 40 to 330 mg KOH/g (i) and having an acid value or 2 to 20 mg KOH/g (ii) is a polyol derived from castor oil and may be a polyol composition as described in Japanese Patent Application Laid-Open No. 2005-89712 that contains a castor oil-based polyol derived from ricinoleic acid, an acidic phosphate compound having 12 or more total carbon atoms, and optionally a terpene phenol. Such compositions are available from Itoh Oil Chemicals, Co., Ltd. under trade names of URIC H-1262 and H-2151U.

URIC H-1262 available from Itoh Oil Chemicals, Co., Ltd. is a polyol containing a castor oil-based polyol and an acidic phosphate compound having 12 or more total carbon atoms (viscosity = 3,500 to 8,500 mPa·s/25°C, hydroxyl value = 240 to 290 (Unit: mg KOH/g), acid value = 4 to 15 (Unit: mg KOH/g)). It exhibits high adhesion to the specific floor base materials.
URIC H-2151U available from Itoh Oil Chemicals, Co., Ltd. is a polyol containing a castor oil-based polyol, an acidic phosphate compound having 12 or more total carbon atoms and a terpene phenol (viscosity = 3,500 to 8,500 mPa·s/25°C, hydroxyl value = 240 to 290 (Unit: mg KOH/g), acid value = 4 to 15 (Unit: mg KOH/g)). It exhibits high adhesion to the specific floor base materials.

(c-3) Modified rubber will now be described. Examples of the modified rubber (c-3) for use in the present invention include liquid carboxylated polyisoprene (c-3-1) and carboxylated polybutadiene (c-3-2).

(c-3-1) Carboxylated isoprene

The carboxylated isoprene for use in the present invention serves to improve the adhesion to the specific floor base materials.

An example of the component (c-3-1) is LIR-420, a maleic polyisoprene manufactured by Kuraray Co., Ltd.

(c-3-2) Carboxylated polybutadiene

The carboxylated polybutadiene (c-3-2) for use in the present invention serves to improve the adhesion to the specific floor base materials.

The component (c-3-2) is a polymer that is transparent at room temperature and in which the backbone microstructure of the polybutadiene consists of vinyl 1,2-linkage, trans 1,4-linkage and cis 1, 4-linkage. It is preferred that the vinyl 1,2-linkage compose 30% by mass or less. The vinyl 1, 2-linkage greater than 30% by mass can lead to decreased storage stability and is thus undesirable. It is preferred that the cis 1, 4-linkage compose 40% by mass or more. The cis 1,4-linkage less than 40% by mass can lead to decreased adhesion and is thus undesirable.

The carboxylated polybutadiene component (c-3-2) can be obtained by reacting a carboxyl group-introducing compound with a liquid polybutadiene. 1,3-butadiene that composes the liquid polybutadiene and the carboxyl group-introducing compound are preferably present in respective proportions of 80 to 98% by mass (1,3-butadiene) and 2 to 20% by mass (carboxyl group-introducing group).

The liquid polybutadiene used in the reaction preferably has a number average molecular weight of 500 to 10,000, and more preferably 1,000 to 7,000. The liquid polybutadiene desirably has a wide distribution of the molecular weight. More preferably, the liquid polybutadiene has an iodine value as determined according to DIN53241 of 30 to 500 g iodine/100 g of the material. Preferably, the liquid polybutadiene has a molecular structure that is composed of 70 to 90% of cis-double bonds, 10 to 30% of trans-double bonds and 0 to 3% of vinyl double bonds.

Examples of the carboxyl group-introducing compounds that can be used include ethylene-based unsaturated dicarboxylic compound, such as ethylene-based unsaturated dicarboxylic acids and anhydrides or monoesters thereof. Specific examples of the compounds include maleic acid, fumaric acid, itaconic acid, 3,6-tetrahydrophthalic acid, itaconic anhydride, 1,2-dimethylmaleic anhydride, maleic acid monomethyl ester or maleic acid monoethyl ester. Of these, maleic anhydride is preferred due to its safety, economy and reactivity (maleic polybutadiene is preferred).

The polybutadiene/maleic anhydride adduct formed of polybutadiene and maleic anhydride can be produced by a known process.

The maleic liquid polybutadiene preferably has an acid value as determined according to DIN ISO 3682 of 50 to 120 (mg KOH/g), and more preferably 70 to 90 (mg KOH/g). An acid value less than 50 (mg KOH/g) results in decreased adhesion to the specific floor base materials, whereas an acid value greater than 120 (mg KOH/g) leads to increased viscosity, causing decreased workability.

The maleic percentage of the maleic liquid polybutadiene is preferably 6 to 20%, more preferably 6 to 15%, and even more preferably 7 to 10% although it needs to be taken into account with the viscosity.

The viscosity of the maleic liquid polybutadiene (at 20°C) as determined by DIN 53214 is preferably from 3 to 16 Pa·s, more preferably from 5 to 13 Pa·s, and even more preferably from 6 to 9 Pa·s.

Further, the maleic liquid polybutadiene contains 30% or less of vinyl double bonds. A liquid polybutadiene in which cis-double bonds are present within the above-specified range tends to have a higher flexibility and a higher maleic percentage (i.e., acid value) as described above as compared to a liquid polybutadiene in which the cis-double bonds are present at a lower percentage than the above-specified lower limit. As a result, the resulting coating material will have high adhesion to the specific floor base materials.

While the viscosity of a liquid polybutadiene in which the cis-double bonds are present at a lower percentage than the above-specified lower limit rapidly increases with increasing maleic percentage, the viscosity of a liquid polybutadiene having cis-double bonds within the above-specified range exhibits a small increase. The low viscosity within the above-specified range ensures high reactivity and improves workability. Also, the resulting coating material has improved decorativeness.

An example of the maleic liquid polybutadiene is POLYVEST OC 800S (registered trademark) and 1200S manufactured by Degussa AG.

(c-4) Compound having an epoxy equivalent of 150 to 700 g/mol will now be described.

One form of the compound (c-4) having an epoxy equivalent of 150 to 700 g/mol for use in the present invention is a polyepoxy compound (c-4-1) having an epoxy equivalent of 150 to 250 g/mol.

Examples of the polyepoxy compound (c-4-1) having an epoxy equivalent of 150 to 250 g/mol include polyglycidyl ether compounds of mononuclear polyhydric phenol compounds, such as hydroquinone, resorcin, pyrocatechol and phloroglucinol; polyglycidyl ether compounds of polynuclear polyhydric phenol compounds, such as dihydroxynaphthalene, biphenol, methylenebisphenol (bisphenol F), methylenebis(orthocresol), ethylidenebisphenol, isopropylidenebisphenol (biphenol A), isopropylidenebis(orthocresol), tetrabromobisphenol A, 1,3-bis(4-hydroxycumylbenzene), 1,4-bis (4-hydroxycumylbenzene), 1,1,3-tris(4-hydroxyphenyl)butane, 1,1,2,2-tetra(4-hydroxyphenyl)ethane, thiobisphenol, sulfobisphenol, oxybisphenol, phenol novolac, orthocresol novolac, ethylphenol novolac, butylphenol novolac, octylphenol novolac, resorcin novolac and terpenediphenol; polyglycidyl ethers of polyalcohol, such as ethylene glycol, propylene glycol, butylene glycol, hexanediol, polyglycol, thiodiglycol, glycerin, trimethylolpropane, pentaerythritol, sorbitol and bisphenol A-ethylene oxide adducts; homopolymers or copolymers of glycidyl methacrylate and glycidyl esters of aliphatic, aromatic or alicyclic polybasic acids, such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid and endomethylene tetrahydrophthalic acid; epoxy compounds having a glycidylamino group, such as N,N-diglycidylaniline, bis(4-(N-methyl-N-glycidylamino)phenyl)methane and diglycidyl orthotoluidine; epoxidized cyclic olefin compounds, such as vinylcyclohexene diepoxide, dicyclopentanediene diepoxide, 3,4-epoxycyclohexylmethyl-3,4-epoxycyclohexanecarboxylate, 3,4-epoxy-6-methylcyclohexylmethyl-6-methylcyclohexanecarboxyla te and bis(3,4-epoxy-6-methylcyclohexylmethyl) adipate; epoxidized conjugated diene polymers, such as epoxidized polybutadiene and epoxidized styrene-butadiene copolymers; and heterocyclic compounds, such as triglycidyl isocyanurate.

More preferred examples of the polyepoxy compound (c-4-1) having an epoxy equivalent of 150 to 250 g/mol for use in the present invention, in terms of adhesion to the specific floor base materials, include polyglycidyl ethers of bisphenol compounds, such as biphenol, methylenebisphenol (bisphenol F), methylenebis(orthocresol), ethylidenebisphenol, isopropylidenebisphenol (biphenol A), isopropylidenebis(orthocresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfobisphenol, oxybisphenol and terpenediphenol.

An example of the polyglycidyl ethers of bisphenol compounds having an epoxy equivalent of 150 to 250 g/mol is ADEKA RESIN EP-4100E (ADEKA Corporation; bisphenol A diglycidyl ether, epoxy equivalent = 190).

Another form of the compound (d-4) having an epoxy equivalent of 150 to 700 g/mol for use in the present invention is a polyolefin-based polymer (c-4-2) having an epoxy equivalent of 500 to 700 g/mol. Preferably, the polyolefin-based polymer has a hydroxyl group on one end thereof and has an epoxy group introduced therein. More preferably, the polyolefin-based polymer is a liquid.

An specific example of the compound (c-4) having an epoxy equivalent of 150 to 700 g/mol is L-207 manufactured by Kuraray Co., Ltd. (identical to KRATON LIQUID (trademark) L-207 POLYMER). L-207 is a polymer having an epoxy equivalent of 590 g/mol, a hydroxyl equivalent of 7, 000 g/mol and a glass transition point of -53°C and having a fully saturated backbone (having an epoxidized ethylene· propylene-ethylene·butylene-OH structure). It is preferred due to its adhesion to the specific floor base materials.

<u>Component (d): At least one radical polymerization initiator selected from the group consisting of organic peroxides, UV initiators and electron-beam initiators</u>

The component (d) of the present invention is at least one radical polymerization initiator selected from the group consisting of organic peroxides, UV initiators and electron-beam initiators.

Examples of the UV initiators and electron-beam initiators include benzophenone, 2,4-dihydroxybenzophenone, 2-hydroxy-4-methoxybenzophenone, acetophenone, benzoin, benzoin ethyl ether, benzoin n-propyl ether, benzoin isopropyl ether, benzoin n-butyl ether, benzoin isobutyl ether, benzyl-1-(4-isopropylphenyl)-2-hydroxy-2-methylpropane-1-one, 2-hydroxy-2-methyl-1-phenylpropane-1-one, benzyl sulfide, thioxanthone, bis(2,4,6-trimethylbenzoyl)-phenylphosphine oxide and 2-chlorothioxanthone.

When the reaction is carried out by applying heat to the coating composition of the present invention, organic peroxides may preferably be used.

Examples of the organic peroxides for use in the present invention include dicumyl peroxide, di-tert-butyl peroxide, 2,5-dimethyl-2,5-di-(tert-butylperoxy)hexane, 2,5-dimethyl-2,5-di(tert-butylperoxy)hexine-3, 1,3-bis(tert-butylperoxyisopropyl)benzene, 1,1-bis(tert-butylperoxy)-3,3,5-trimethylcyclohexane, n-butyl-4,4-bis(tert-butylperoxy) valerate, benzoyl peroxide, p-chlorobenzoyl peroxide, 2,4-dichlorobenzoyl peroxide, tert-butyl peroxybenzoate, tert-butylperoxyisopropyl carbonate, diacetyl peroxide, lauroyl peroxide, tert-butylcumyl peroxide, succinic acid peroxide, methyl ethyl ketone

peroxide and cyclohexanone peroxide.

Of these, 2,5-dimethyl-2,5-di-(tert-butylperoxy)hexane and 2,5-dimethyl-2,5-di(tert-butylperoxy)hexine-3 are most preferred since they can be thermally cured efficiently in a common thermo-setting temperature range of 100°C to 150°C.

The coating material of the present invention may contain an antistatic material (e). The antistatic material (e) is preferably an ionic liquid (e-1) described below since it helps achieve the advantages of the present invention.
The ionic liquid (e-1) is a salt composed of a cation and an anion and is a liquid.
The ionic liquid (e-1) preferably contains at least one cation selected from the group consisting of imidazolium, pyridinium, pyrrolidinium, phosphonium, ammonium and sulfonium. Examples of the cations are given below.

[Chemical Formula 4]

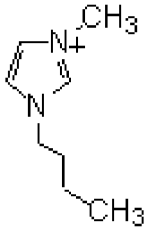
(1 - 1)

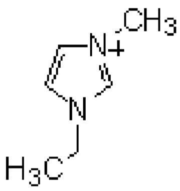
(1 - 2)

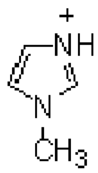
(1 - 3)

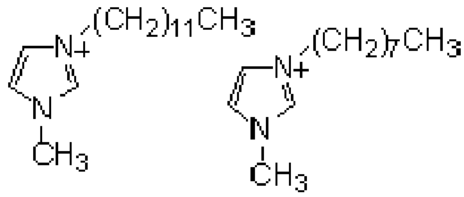
(1 - 4)
(1 - 5)

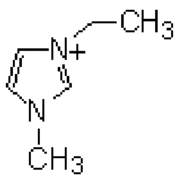
(1 - 6)

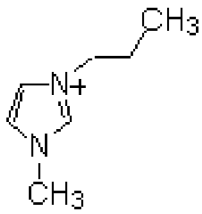
(1 - 7)

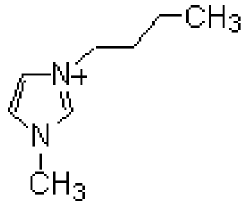
(1 - 8)

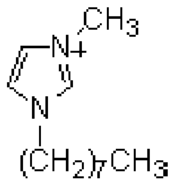
(1 - 9)

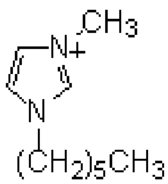
(1 - 1 0)

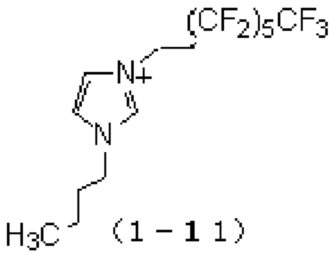
(1 - 1 1)

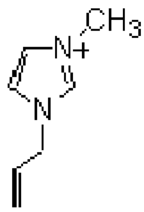
(1 - 1 2)

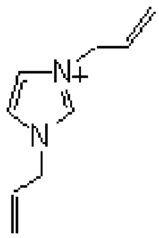
(1 - 1 3)

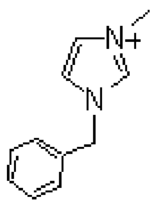
(1 - 1 4)

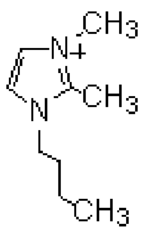
(1 - 1 5)

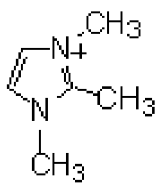
(1 - 1 6)

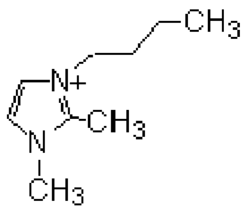
(1 - 1 7)

[Chemical Formula 5]

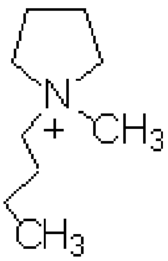

(2 - 1)

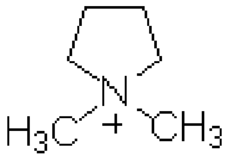

(2 - 2)

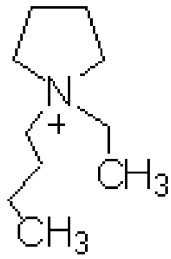

(2 - 3)

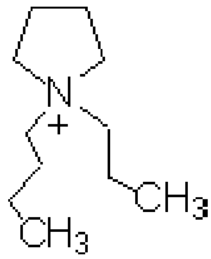

(2 - 4)

[Chemical Formula 6]

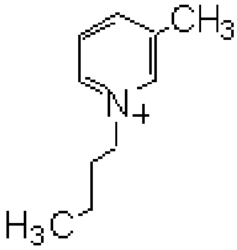

(3 - 1)

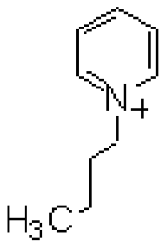

(3 - 2)

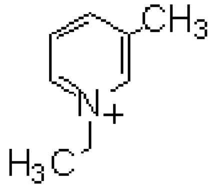

(3 - 3)

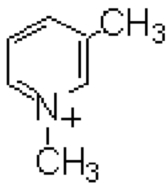

(3 - 4)

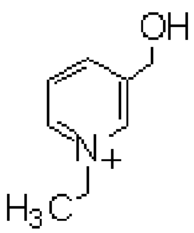

(3 - 5)

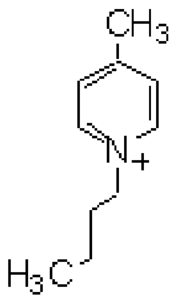

(3 - 6)

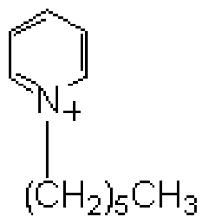

(3 - 7)

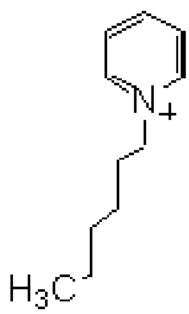

(3 - 8)

[Chemical Formula 7]

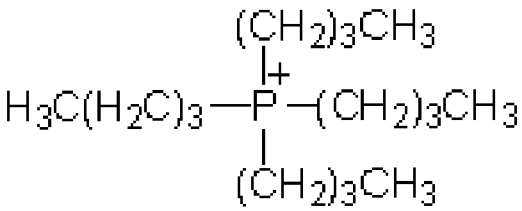

(4 - 1)

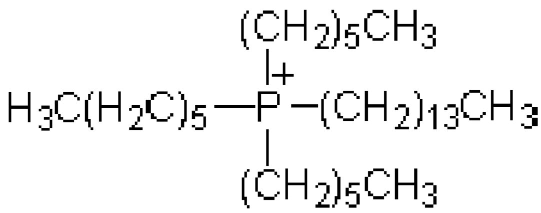

(4 - 2)

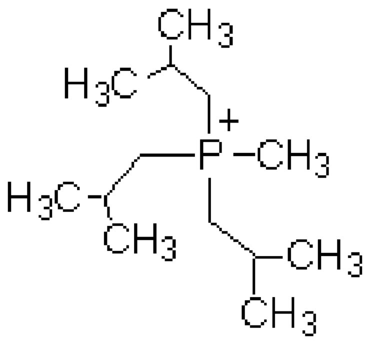

(4 - 3)

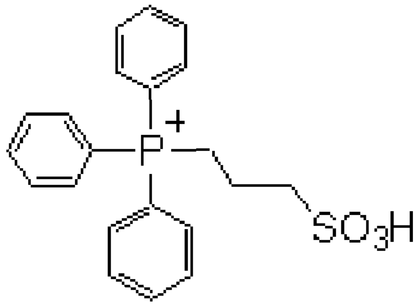

(4 - 4)

[Chemical Formula 8]

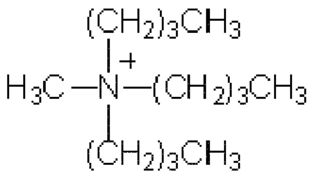

(5 − 1)

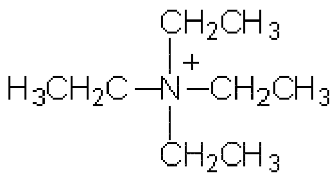

(5 − 2)

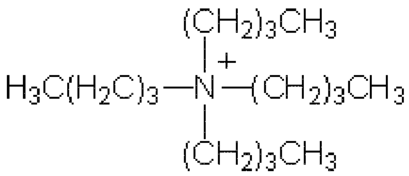

(5 − 3)

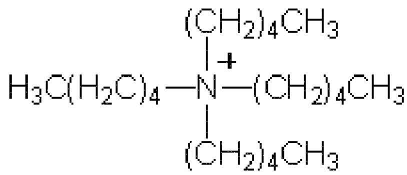

(5 − 4)

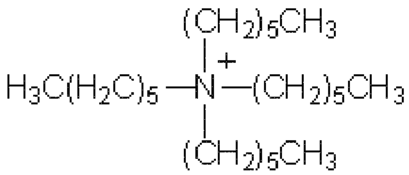

(5 − 5)

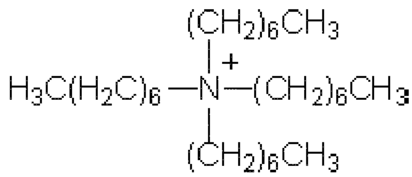

(5 − 6)

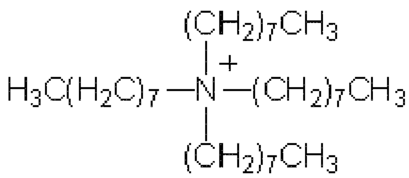

(5 − 7)

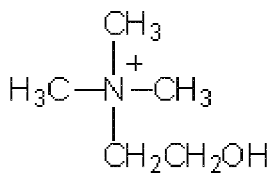

(5 − 8)

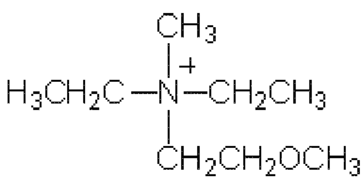

(5 − 9)

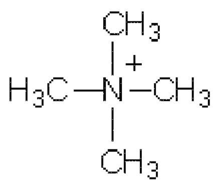

(5 −10)

[Chemical Formula 9]

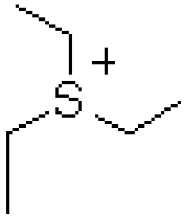 (6 - 1) 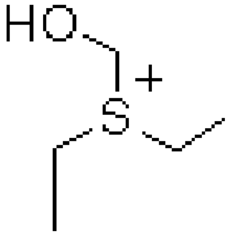 (6 - 2) 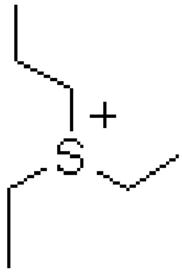 (6 - 3) 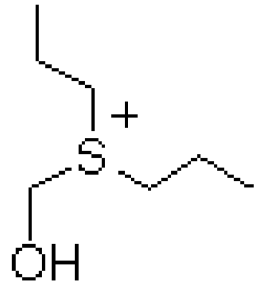 (6 - 4)

The ionic liquid (e-1) preferably contains an anion selected from the group consisting of halogens, carboxylates, sulfates, sulfonates, thiocyanates, aluminates, borates, phosphates, phosphinates, amides, antimonates, imides and methides. Examples of the anions are given below.

[Chemical Formula 10]

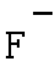
(7 - 1)

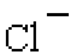
(7 - 2)

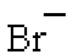
(7 - 3)

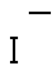
(7 - 4)

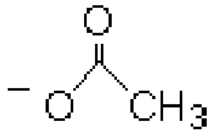
(7 - 5)

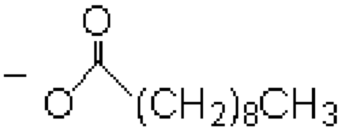
(7 - 6)

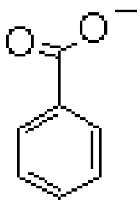
(7 - 7)

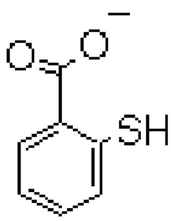
(7 - 8)

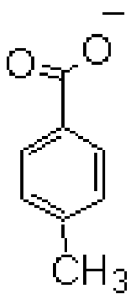
(7 - 9)

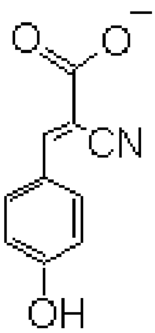
(7 - 1 0)

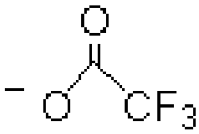
(7 - 1 1)

[Chemical Formula 11]

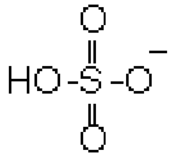

(8-1)

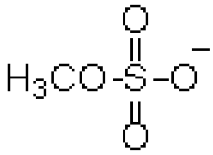

(8-2)

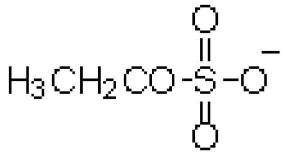

(8-3)

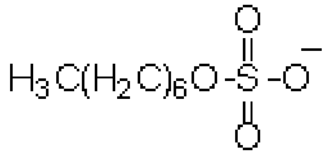

(8-4)

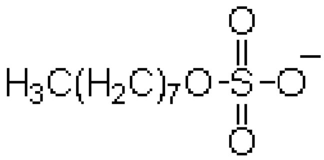

(8-5)

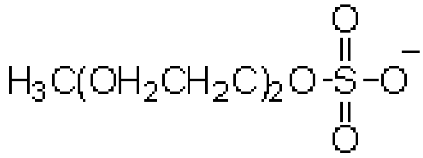

(8-6)

[Chemical Formula 12]

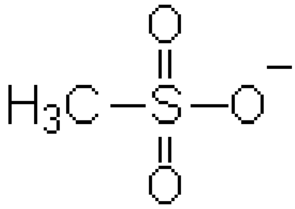

(9-1)

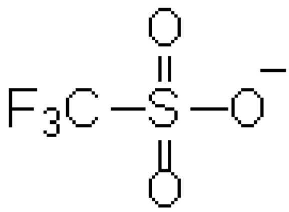

(9-2)

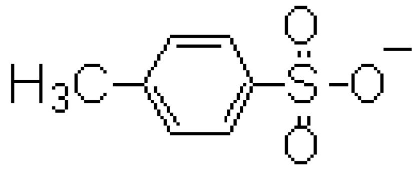

(9-3)

[Chemical Formula 13]

$SCN^-$ (10-1)

$ALCl_4^-$ (10-2)

$PF_6^-$ (10-3)

$BF_4^-$ (10-4)

$NO_3^-$ (10-5)

$SbF_6^-$ (10-6)

$HSO_4^-$ (10-7)

[Chemical Formula 14]

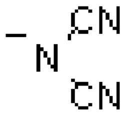

(11-1)

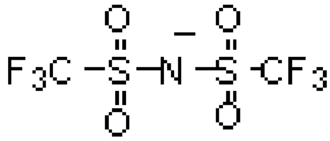

(11-2)

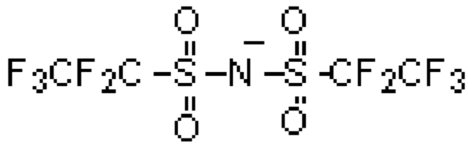

(11-3)

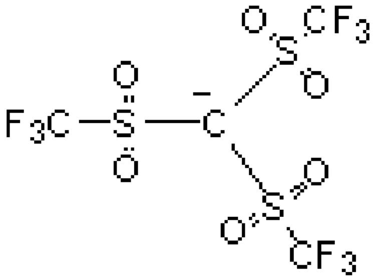

(11-4)

[Chemical Formula 15]

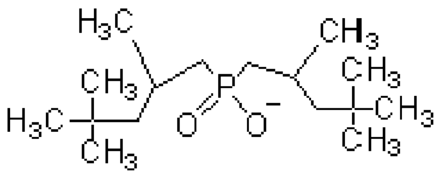

(12-1)

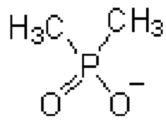

(12-2)

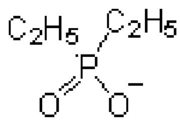

(12-3)

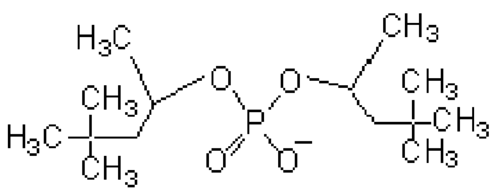

(12-4)

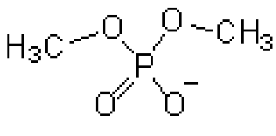

(12-5)

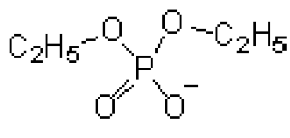

(12-6)

Preferably, the ionic liquid is water-soluble.

The ionic liquid preferably includes ion pairs as shown by the following combinations of the cation and the anion: (1-1) and (10-1), (1-1) and (10-4), (1-1) and (11-1), (1-2) and (8-3), (1-2) and (10-1), (1-2) and (10-2), (1-2) and (10-4), (1-2) and (11-1), (1-6) and (7-11), (1-6) and (8-3), (1-6) and (8-5), (1-6) and (8-6), (1-6) and (9-1), (1-6) and (9-2), (1-6) and (9-3), (1-6) and (10-1), (1-6) and (10-4), (1-6) and (10-7), (1-6) and (11-1), (1-6) and (12-5), (1-6) and (12-6), (1-8) and (8-2), (1-8) and (8-5), (1-8) and (8-6), (1-8) and (9-1), (1-8) and (10-4), (1-12) and (10-4), (1-13) and (10-4), (1-17) and (10-4), (2-1) and (9-1), (2-1) and (9-2), (3-1) and (8-2), (3-1) and (8-3), (3-1) and (11-1), (3-5) and (8-3), (3-6) and (10-4), (3-8) and (9-2), (5-8) and (12-5), and (5-9) and (10-4). The ionic liquids including ion pairs of (1-2) and (8-3), (1-2) and

(10-1), or (1-2) and (10-2), among other pairs, are particularly preferred since the advantages of the present invention can be effectively achieved by such ionic liquids (i.e., adhesion to the specific floor base materials in combination with antistatic property). The ionic liquids including the ion pair of (1-2) and (8-3) are even more preferred since they exhibit particularly high adhesion to the specific base materials and high antistatic property.

The coating material of the present invention may further contain an antistatic improver (f). The antistatic improver (f) may be at least one selected from the group consisting of acidic phosphates (f-1), carbodiimide compounds (f-2) and vinyl ether-based compounds (f-3).

The acidic phosphate (f-1) for use in the present invention may be any acidic phosphate commonly used as an additive to plastics. For example, acidic phosphates in which 1 to 3 or more of the active hydrogens of phosphoric acids have been substituted may be used. Examples of such phosphoric acids include phosphoric acid, metaphophoric acid, orthophosphoric acid, phosphorous acid, pyrophophoric acid, diphosphinic acid, diphosphoric acid and dipshophonic acid. Examples of the substituents of the active hydrogen include alkyl group, aryl group, alkenyl group and hydroxyalkyl group (each having 1 to 30 carbon atoms). Examples of the acidic phosphate include monoalkyl esters, monoaryl esters, dialkyl esters or diaryl esters of phosphoric acids; monoalkyl esters of phosphorous acid; and trialkyl esters of pyrophophoric acid. Of these, preferred are those represented by the following formula (f-1-1):

[Chemical Formula 16]

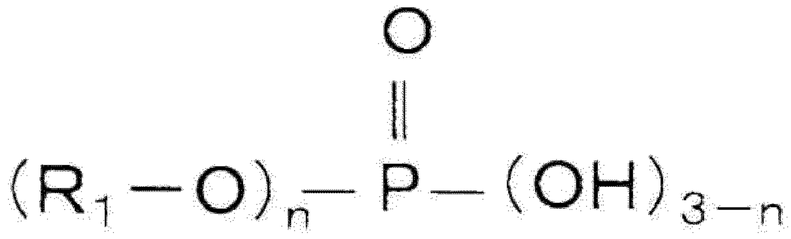

(f-1-1)

[wherein $R_1$ is a monovalent hydrocarbon group having 1 to 30 carbon atoms; n is 1 or 2; and when n is 2, $R_1$ may be the same or different from each other]. Examples of the alkyl group having 1 to 30 carbon atoms represented by $R_1$ in the formula (f-1-1) include methyl, ethyl, n- and i-propyl, n-, i-, sec- and *tert*-butyl, amyl, tertiary amyl, hexyl, octyl, isooctyl, 2-ethylhexyl, tertiary octyl, nonyl, tertiary nonyl, isononyl, decyl, isodecyl, dodecyl, tridecyl, isotridecyl, tetradecyl, hexadecyl, octadecyl, eicosyl and triaconryl groups. When n is 2, the two $R_1$ groups may be the same or different from each other. Acidic phosphates in which $R_1$ has 8 to 30 carbon atoms are more preferred. Particularly preferred are monolauryl ester of phosphoric acid, monostearyl ester of phosphoric acid, distearyl ester of phosphoric acid, or combinations thereof.

The acidic phosphates can be synthesized by a process involving hydrolysis of a corresponding trialkyl phosphate or a triester or tetraester of a corresponding phosphoric acid, by a process involving reacting phosphorus oxychloride with a corresponding alkanol, followed by hydrolysis, by a process involving reacting phosphorus pentaoxide with a corresponding alkanol, or by any other known processes.

The carbodiimide compound (f-2) in the present invention is preferably a compound having two or more carbodiimide groups (-N = C = N-) in its molecule and may be a known polycarbodiimide.

The carbodiimide compound may be a high molecular weight polycarbodiimide produced by subjecting a diisocyanate to decarboxylative condensation in the presence of a carbodiimidization catalyst.

Such compounds include compounds obtained by decarboxylative condensation of the diisocyanates given below.

The diisocyanate may be one or a mixture of 4,4'-diphenylmethane diisocyanate, 3,3'-dimethoxy-4,4'-diphenylmethane diisocyanate, 3,3'-dimethyl-4,4'-diphenylmethane diisocyanate, 4,4'-diphenylether diisocyanate, 3,3'-dimethyl-4,4'-diphenyl ether diisocyanate, 2,4-tolylene diisocyanate, 2,6-tolylene diisocyanate, 1-methoxyphenyl-2,4-diisocyanate, isophorone diisocyanate, 4,4'-dicyclohexylmethane diisocyanate and tetramethyl xylylene diisocyanate.

The carbodiimide catalyst may be a phospholene oxide, such as 1-phenyl-2-phospholene-1-oxide, 3-methyl-2-phospholene-1-oxide, 1-ethyl-3-methyl-2-phospholene-1-oxide, 1-ethyl-2-phospholene-1-oxide or a 3-phospholene isomer thereof.

An example of the high molecular weight polycarbodiimide is CARBODILYTE series manufactured by Nisshinbo Chemical Ltd. Of these products, CARBODILYTE V-01, 03, 05, 07, 09 are preferred due to their ability to effectively improve the antistatic property.

The vinyl ether-based compound (f-3) in the present invention contributes to improving electrical conductivity of the cured coating material at room temperature.

Examples of the vinyl ether-based compound (f-3) include vinyl ethers of alkyl or alkenyl alcohols, such as ethyl vinyl ether, isobutyl vinyl ether, n-butyl vinyl ether, tert-butyl vinyl ether, n-amyl vinyl ether, i-amyl vinyl ether, n-hexyl vinyl ether, n-octyl vinyl ether, 2-ethylhexyl vinyl ether, octadecyl vinyl ether, n-dodecyl vinyl ether, stearyl vinyl ether and oleyl vinyl ether; vinyl ethers of monoalcohols having an alicyclic ring or an aromatic ring, such as cyclohexyl vinyl ether, 2-methylcyclohexyl vinyl ether, cyclohexylmethyl vinyl ether and benzyl vinyl ether;

For example, mono- to poly-vinyl ethers of polyalcohol, such as 1,4-cyclohexanedimethanol divinyl ether (CHDM), glycerol monovinyl ether, 1,4-butanediol monovinyl ether, 1,4-butanediol divinyl ether, 1,6-hexanediol divinyl ether, neopentyl glycol divinyl ether, pentaerythritol divinyl ether, pentaerythritol tetravinyl ether, trimethylolpropane divinyl ether, trimethylolpropane trivinyl ether, 1,4-dihydroxycyclohexane monovinyl ether, 1,4-dihydroxycyclohexane divinyl ether, 1,4-dihydroxymethylcyclohexane monovinyl ether and 1,4-dihydroxymethylcyclohexane divinyl ether;

For example, polyalkylene glycol mono- or divinyl ethers, such as diethylene glycol divinyl ether, tetraethylene glycol divinyl ether, triethylene glycol divinyl ether and diethylene glycol monobutyl monovinyl ether ; other vinyl ethers, such as glycidyl vinyl ether and ethylene glycol vinyl ether methacrylate ; and hydroxybutyl vinyl ether.

Triethylene glycol divinyl ether and 1,4-cyclohexanedimethanol divinyl ether (CHDM) are preferred.

The blending proportions of the components of the coating material of the present invention will now be described.

Preferred blending proportions of the components (a), (b), (c) and (d) are 20 to 40 % by mass (component (a)), 50 to 70 % by mass (component (b)) and 1 to 20 % by mass (component (c)), respectively, with respect to 100 % by mass of the total amount of the components (a), (b) and (c), and 0.1 to 15 parts by mass (component (d)) with respect to 100 parts by mass of the total amount of the components (a), (b) and (c).

If the component (a) exceeds its upper limit, then the pencil hardness, Taber wear property, surface smoothness, flexibility and impact-resistance will decrease, as will the solvent-resistance. If the component (a) is less than its lower limit, then the coating material tends to become brittle and the Taber wear property, flexibility and impact-resistance will decrease, as will the water-resistance.

If the component (b) exceeds its upper limit, then the coating composition tends to become brittle and the pencil hardness and Taber wear property will decrease, and so will the water-resistance, flexibility and impact-resistance. If the component (b) is less than its lower limit, then the adhesion will decrease, as will the water-resistance, pencil hardness and surface smoothness.

If the component (c) exceeds its upper limit, then the pencil hardness and Taber wear property will decrease, and so will the water-resistance, adhesion and total light transmittance. If the component (c) is less than its lower limit, then the coating composition tends to become brittle and the Taber wear property will decrease, as will the adhesion and water-resistance.

If the component (d) exceeds its upper limit, then excessive contraction may result and the water-resistance will decrease, as will the adhesion and surface smoothness. If the component (d) is less than its lower limit, then the coating composition will not cure.

Preferred blending proportions of the components (a), (b), (c) and (d) are 25 to 35 % by mass (component (a)), 55 to 65 % by mass (component (b)) and 3 to 15 % by mass (component (c)), respectively, with respect to the total amount of the components (a), (b) and (c) (= 100 % by mass). When the component (d) is selected from UV initiators and electron-beam initiators, the blending proportion of the component (d) is 5 to 10 parts by mass, and when the component (d) is an organic peroxide, the blending proportion of the component (d) is 0.1 to 5 parts by mass, with respect to the total amount of the components (a), (b) and (c) (= 100 parts by mass).

The lower limit of the component (c) is more preferably 5 % by mass or more in view of the adhesion to the specific floor base materials.

When the coating material of the present invention contains the antistatic material (e), for example, the amount of the ionic liquid (e-1) is preferably from 0.5 to 10 parts by mass, and more preferably from 2 to 7 parts by mass with respect to 100 parts by mass of the total amount of the components (a) to (c).

When the coating material of the present invention contains the antistatic improver (f), for example, the amount of at least one selected from the group consisting of the acidic phosphates (f-1), the carbodiimide compounds (f-2) and the vinyl ether-based compounds (f-3) is preferably from 0.02 to 30 parts by mass, more preferably from 0.03 to 20 parts by mass, and even more preferably from 0.04 to 3 with respect to one part by mass of the ionic liquid (e-1).

In one production process of the coating material of the present invention, the respective components (a) to (d) and other optional components can be mixed together in predetermined proportions and the mixture can then be stirred with an appropriate stirrer (for example, MAZERUSTAR KK-250S (Kurabo Industry Ltd.), a stirrer and a defoaming apparatus combined in one unit).

The coating composition of the present invention has a suitable viscosity for handling that does not require dilution with an organic solvent. For example, the coating material of the present invention has a viscosity at 25°C of 20 to 2,000 mPa·s, preferably 100 to 1500 mPa·s (as determined by type B viscometer). If necessary, the coating composition may be diluted with an organic solvent.

If necessary, a polymerization accelerator, an inorganic filler, a pigment or other optional components may be added to the coating composition of the present invention as desired.

The coating composition of the present invention can be coated and cured on any of the specific floor base materials. The coating methods include spin coating, (doctor) knife coating, micro gravure coating, direct gravure coating, offset gravure coating, reverse gravure coating, reverse roll coating, (Meyer) bar coating, die coating, spray coating, dip coating (One example of spin coater is a manual spinner model ASS-301 manufactured by Able Inc.). When the component (d) is the UV initiator or the electron-beam initiator, the coating composition can be cured by irradiating with UV light or an electron beam. When UV light is used, conditions for irradiation may be, for example, irradiation intensity of 150 to 1, 000 mJ/cm$^2$ and irradiation time of 1 to 60 sec. When the component (d) is the organic peroxide, the coating composition can be cured, for example, by heating it to 100 to 150°C.

The thickness of the cured coating material is for example from 20 μm to 1,000 μm, preferably from 30 μm to 500 μm, and more preferably from 50 μm to 300 μm in view of price and performance.

The coating material of the present invention can form, without using a primer or other treatments, a cured coating layer (A) with high adhesion over a variety of floor base layers, in particular, any of the specific floor base layers (B), onto which conventional coating materials could not be generally adhered and cured without using special primers and other treatments (if the cost and other conditions allow the use of a primer on the base material, even stronger adhesion is achieved).

A laminate formed of the coating layer of the present invention (A) placed adjacent to the specific floor base layer (B) is useful, for example, for flooring.

Examples

The present invention will now be described with reference to Examples and Comparative Examples, which are not intended to limit the present invention.

Materials used in Examples and Comparative Examples are as follows:

Component (a-1): Vinyl ester resin

(i) Urethane acrylate

CN975 aromatic urethane acrylate manufactured by Sartomer; type = polyester; viscosity at 60°C = 500; number of functional groups = 6

(ii) Polyester acrylate

CN292 polyester acrylate manufactured by Sartomer; type = aliphatic polyester; viscosity at 25°C = 630; number of functional groups = 4

(iii) Epoxy acrylate

CNUVE151 epoxy acrylate manufactured by Sartomer; type = polyester; viscosity at 25°C = 150, 000; number of functional groups = 2

(iv) Urethane acrylate

CN963B80 urethane acrylate manufactured by Sartomer (1, 6-hexanediol diacrylate HDDA blend) ; type = polyester; viscosity at 60°C = 1,100; number of functional groups = 2

Component (a-2): Unsaturated polyester resin

RIGOLAC 21E-A-2 (trademark) manuractured by Showa Kobunshi Co., Ltd.

Component (b-1): Compound having a cyclic structure and having a single ethylenic unsaturated group

(i) N-vinyl caprolactam manufactured by BASF

Boiling point = 117°C (10mmHg)
Vapor pressure < 0.1 mm Hg (20°C)
Flash point = 110°C

Melting point= 35°C
Viscosity = 3.5 cps (40°C)

Component (b-2): Diacrylate monomer

(i) Dipropylene glycol diacrylate (DPGDA) manufactured by BASF
(ii) Tripropylene glycol diacrylate (TPDGA) manufactured by BASF
(iii) SR238NS 1,6-hexanediol diacrylate manufactured by Sartomer; viscosity at 25°C = 9 mPa·s; number of functional groups = 2; fast curing property; low volatility; fourth group, third petroleum class (Hazardous material classification); skin irritability (PII) = 4.1

Component (b-3): Triacrylate monomer

SR351NS trimethylolpropane triacrylate manufactured by Sartomer; viscosity at 25°C = 106; number of functional groups = 3; fast curing property; low volatility; fourth group, third petroleum class (Hazardous material classification); skin irritability (PII) = 3.0

Component (c): Modifying agent

(c-1-2) Polybutadiene-based polyol

Poly bd R-15HT manufactured by Idemitsu Kosan Co., Ltd.; viscosity = 1.5 Pa·s/30°C; hydroxyl value = 102.7 mg KOH/g (c-1-1-1) Aromatic castor oil-based polyol
URIC (trademark) AC-006 manufactured by Itoh Oil Chemicals, Co., Ltd. (a polyol derived from castor oil represented by the formula (4) above); viscosity = 0.7 to 1.5 Pa·s/25°C; hydroxyl value = 194 to 214 mg KOH/g

(c-1-3) Polyisoprene-based polyol

Polyip (registered trademark) manufactured by Idemitsu Kosan Co., Ltd. (a polyisoprene-type liquid polymer having highly reactive hydroxyl groups at the terminals of its molecule); hydroxyl value = 46.6 mg KOH/g; number average molecular weight Mn = 2500

(c-2-1) Castor oil-based polyol

URIC H-1262 manufactured by Itoh Oil Chemicals, Co., Ltd. (a polyol containing a castor oil-based polyol and an acidic phosphate compound having 12 or more total carbon atoms); acid value = 4 to 15 (Unit = mg KOH/g) ; hydroxyl value = 240 to 290 (Unit = mg KOH/g)

(c-2-1) Castor oil-based polyol

URIC H-2151U manufactured by Itoh Oil Chemicals, Co., Ltd. (a polyol containing a castor oil-based polyol, an acidic phosphate compound having 12 or more total carbon atoms and a terpene phenol) ; viscosity = 3,500 to 8,500 Pa·s/25°C; acid value = 4 to 15 (Unit = mg KOH/g); hydroxyl value = 240 to 290 (Unit = mg KOH/g)

(c-1-3) Hydrogenated product of polyisoprene-based polyol

EPOLE (trademark) manufactured by Idemitsu Co., Ltd. (a hydroxyl-terminatedliquidpolyolefin); viscosity (Pa·s/30°C) = 75; hydroxyl value (mg KOH/mg) = 50.5; number average molecular weight = 2,500

(c-3-1) Maleic polyisoprene

LIR-420 manufactured by Kuraray Co., Ltd.; acid value (mg KOH/g) = 40

(c-3-2) Maleic acid-modified polybutadiene

Ricon130MA8 manufactured by Sartomer; viscosity (Pa·s/30°C) = 6.5; acid value (Pa·s/30°C) = 46; number

average molecular weight = 2,700

(c-3-2) Maleic acid-modified polybutadiene

POLYVEST (trademark) OC800S manufactured by Evonik (1,4-cis double bonds in polybutadiene = 75%, 1,4-trans double bonds = 24%, vinyl bonds = 1%, maleic percentage = 7.5% ; number average molecular weight = 3, 300 (GPC), mass average molecular weight = 13, 600 (GPC) ; viscosity (20°C) = 6 to 9 Pa·s (as determined by DIN53214); acid value = 70 to 90 mg KOH/g; iodine value = 380 to 420 g/100 g (polymerized by Ziegler-Natta catalyst)

(c-1-4) Epoxy polyol resin

EPICLON (trademark) U-125-60BT manufactured by DIC; viscosity (Pa·s/20°C) = 70; hydroxyl value (mg KOH/mg) = 120 (c-4-1) Polyepoxy compound having an epoxy equivalent of 150 to 250 g/mol
ADEKA RESIN EP-4100E manufactured by ADEKA Corporation (bisphenol A diglycidyl ether); epoxy equivalent = 190 (c-4-2) Polymer having an epoxy equivalent of 500 to 700 g/mol and having a fully saturated backbone
L-207 manufactured by Kuraray Co., Ltd. (KRATON LIQUID (trademark)) (a polymer having an epoxy equivalent of 590 g/mol, hydroxyl equivalent of 7,000 g/mol and glass transition point of -53°C, and having a fully saturated backbone (epoxidized ethylenepropylene-ethylene·butylene-OH structure))

Each polyol was characterized as described below.

Method for measuring viscosity

A single cylindrical rotary viscometer (Type B, TVC-5) is used according to JIS K7117-1.

1. A 500 ml beaker (standard) is used in the meter.

2. Standard rotors are selected from two types: M1 to M4 rotors for low to medium viscosity, and H1 to H7 rotors for medium to high viscosity.

Method for measuring hydroxyl value

The hydroxyl value is the number of milligrams of potassium hydroxide required to acetylate OH groups present in one gram of the sample. According to JIS K 1557-1, acetic anhydride is used to acetylate OH groups in the sample and the remaining acetic acid is titrated with a potassium hydroxide solution.

[Math. 1]

$$(hydroxyl\,value) = \frac{(A-B) \times f \times 28.05}{Sample\,(g)} + (acid\,value)$$

A: Amount (ml) of a 0.5 mol/l ethanol solution of potassium hydroxide used in the blank test
B: Amount (ml) of 0.5 mol/l ethanol solution of potassium hydroxide used in titration
f: factor

Method for measuring acid value

The acid value is expressed in the number of milligrams of potassium hydroxide required to neutralize the acidic component present in one gram of the sample.

According to JIS K 1557-5,

(1) Determination of endpoint pH

10 mL of a buffer stock solution is placed in a 200 mL beaker. 100 mL of a titrant is then added and an electrode is immersed in the solution. A pH that changes within a range of 0.1 pH after 30 seconds is designated as the endpoint of buffering.

(2) Determination of acid value

1. 20 g of the sample is accurately weighed into a 200 ml beaker.
2. 125 mL of a mixed solvent of toluene 2-propanol and pure water is added and the solution is titrated with 0.1 mol/L potassium hydroxide titrant.

According to the results of (1), pH of 11.72 is designated as an endpoint and the acid value is determined by the following equation. The blank was also determined in the same manner.

$$\text{Acid value (mgKOH/g)} = (D-B) \times K \times F \times M/S$$

where

D = titration value (mL)
B = blank (0.085 mL)
K = molecular weight of KOH (56.1)
F = factor of titrant (1.000)
M = mol concentration of titrant (0.1 mol/L)
S = amount of collected sample (g)

Component (d): Radical polymerization initiator

(i) Photopolymerization initiator
IRGACURE (trademark) 819 manufactured by Ciba (bis(2,4,6-trimethylbenzoyl)-phenylphosphine oxide)
(ii) Thermal polymerization initiator
PERHEXA 25B manufactured by NOF Corporation (half life = 1 min / 179°C) (2,5-dimethyl-2,5-di(tert-butylperoxy) hexane)

Component (e-1): Ionic liquid

(i) Basionic LQ 01 manufactured by BASF
(1-ethyl-3-methyl-1H-imidazolium ethyl sulfate; an ionic liquid having an ion pair of the above-described (1-2) and (8-3))
(ii) Basionic AC 09 manufactured by BASF
(1-ethyl-3-methyl-imidazolium tetrachloroaluminate; an ionic liquid having an ion pair of the above-described (1-2) and (10-2))
(iii) Basionic VS 01 manufactured by BASF
(1-ethyl-3-methyl-imidazolium thiocyanate, an ionic liquid having an ion pair of the above-described (1-2) and (10-1))
(iv) TMAC-100 manufactured by Lion Akzo Co., Ltd. (tetramethyl ammonium chloride; an ionic liquid having an ion pair of the above-described (5-10) and (7-2))

Component (f-1): Acidic phosphate

(i) ADK STAB AX-71 manufactured by ADEKA Corporation (a mixture of monostearyl phosphoric acid and distearyl phosphoric acid)
(ii) Monolauryl phosphoric acid manufactured by Daihachi Chemical Industry Co., Ltd.

Component (f-2): Carbodiimide compound

CARBODILYTE V-05 manufactured by Nisshinbo Chemical Ltd.; NCO group = 8.2%

Component (f-3): Vinyl ether-based compound

(i) DVE-3 manufactured by BASF (triethylene glycol divinyl ether); viscosity at 25°C = 2.6 mPa·s
(ii) 1,4-cyclohexanedimethanol divinyl ether (CHDM) manufactured by BASF

Examples 1 to 51 and Comparative Examples 1 to 6

In the respective blending proportions shown in Tables 1 to 15 below, the components (a) and (b) were placed in a container equipped with a stirrer and thoroughly stirred at room temperature. The component (c) was then added and the mixture was further stirred. Subsequently, once the solution reached the room temperature, the component (d) was added and the mixture was thoroughly stirred until no solid materials remained. The component (e) was then added and the mixture was stirred to form a coating material. The viscosity (mPa·s) of each of the resulting adhesive compositions at 25°C was then measured. Specifically, a portable digital rotary viscometer model TVC-7 (Toki Sangyo Co. , Ltd.) was used to measure the viscosity at 25°C using an appropriate rotor (No. 0 to No. 5) corresponding to the viscosity. The results are also shown in the tables.

Each coating material was spin-coated (coating thickness = 10 μm) onto each of various specific floor base materials (dimension = 150 mm × 25 mm × 1 mm thick) shown in the tables and described below. The coatings were cured by irradiating with UV light at 500 $mJ/cm^2$ energy in atmosphere to prepare a laminate. When a thermal polymerization initiator was used, 0 to 0.05 parts by mass of 6% naphthene cobalt were added to the composition as desired, and the coating was cured by heating at 100°C for 30 min.

Specific floor base materials

(B-1) Concrete board (trade name UCRETE manufactured by BASF Pozzolith, 1mm thickness)
(B-2) A commercial urethane-based floor coating material (trade name SARACENU F manufactured by Asahi Glass Co., Ltd.) coated onto the concrete board (B-1) to a thickness of 70 μm.
(B-3) A commercial epoxy-based floor coating material (trade name CHEMICRETE manufactured by ABC Trading Co., Ltd.) coated onto the concrete board (B-1) to a thickness of 70 μm.
(B-4) Beech wood flooring plywood having a thickness of 12 mm, a width of 150 mm and a length of 600 mm.
(B-5) Wooden flooring coated with a known urethane coating material prepared in the following manner.

One side of a beech wood flooring plywood having a thickness of 12 mm, a width of 150 mm and a length of 600 mm was smoothed by polishing with a wide belt sander. A uniform solution of a photocurable coating composition was prepared by mixing together 60 parts by mass of a urethane acrylate resin (trade name ACRYDIC 15-829 manufactured by DIC Corporation), 15 parts by mass of triethylene glycol divinyl ether (trade name DVE-3 manufactured by ISP), 10 parts by mass of phenoxy ethyl acrylate (trade name PO-A manufactured by Kyoeisha Chemical Co., Ltd.), 12 parts by weight of 1, 6-hexanediol diacrylate (trade name KAYARAD HDDA manufactured by Nippon Kayaku Co., Ltd.), and 3 parts by mass of 2,4,6-(trimethylbenzoyl)diphenylphosphine oxide (trade name LUCIRIN TPO manufactured by BASF). The solution was brush-coated onto the smoothed surface at a wet coating weight of 100 $g/m^2$.

Subsequently, the resulting surface of the uncured coating material was irradiated with visible light with a wavelength of 380 to 800 nm emitted by a 1.5 kW halogen lamp for 30 sec to cure the coating film.

The same coating composition as the above-coating composition was then coated once again over the resulting

coating film to form an uncured coating film, the surface of which was then irradiated with visible light in the same manner as described above to cure the coating film. The resulting coating film was smoothed by polishing with the belt sander.

Subsequently, the same coating composition as the above-coating composition was then coated once again over the polished coating film to form an uncured coating film, the surface of which was then irradiated with visible light in the same manner as described above to cure the coating film. The total thickness of the resulting three-layered coating film was 0.25 mm.

Evaluation

(Viscosity)

According to JIS K7233, the viscosity at 25°C was measured using a rotary viscometer model TVC-7. The viscosity of the coating material was measured in the unit of mPa·s and evaluated as follows in terms of its ability to maintain workability without any solvents :

a circle indicates that the viscosity was less than 1, 000 mPa· s/25°C, which is an applicable range for practical use;
a triangle indicates that the viscosity was from 1, 000 to 2000 mPa·s/25°C, which limits the temperature range in which the coating material can be used and is thus undesirable for practical use; and
a cross indicates that the viscosity was greater than 2000 mPa·s/25°C, which means a poor workability and means that the coating material needs to be diluted with a solvent at room temperature or below.

(Measurement of pencil hardness)

According to the method for measuring pencil hardness described in JIS K 5400, a coating sample on a concrete base material (concrete board coating) was used to measure the pencil hardness.
While whether a sample was scratched or not was determined visually by an observer, when it was considered difficult to determine the results by the visual inspection, the depth of the scratch (or dent) was measured by a commercial probe-type surface roughness meter and a sample was determined to be "scratched" when the average of five measurements measured at five different locations was greater than 0.2 μm.

(Measurement of Taber wear property)

A coating sample on a concrete base material (concrete board coating) was subjected to a Taber wear test (CS-17 sand paper, 1, 000 g, 1,000 times) and the amount of wear was measured in milligrams.

(Adhesion test)

According to the grid tape test described in JIS K 5400, the adhesion to each of the specific floor base materials was measured in the following manner.
Grid tape test (Cross-cut test, coating thickness = 10 μm (spin-coating)): Using a cutter knife, 1 × 1 mm grid squares were cut on the test surface (i.e., the coating layer (A) side). A cutter guide was used. The number of the grid squares was 10 × 10 = 100 squares. A strip of cellophane tape was firmly pressed against the grid squares and one end of the strip was rapidly peeled at an angle of 45°. The state of the grid square (i.e., the number of remaining grid squares) was visually observed.

(Water-resistance test)

Each sample was immersed in boiled water (pure water) for 1 hour and was then allowed to dry naturally at room temperature. Whether there was any adverse change in the appearance of the coating layer (A) was visually inspected.
A circle indicates that there was no peeling or crack (after 1 hour immersion).
A cross indicates that there were noticeable peels or cracks (after 1 hour immersion).

(Impact-resistance test)

Test method: Each coating material was applied onto a 25 mm-wide, 1 mm-thick concrete board to a thickness of 15 to 20 μm. Once the coating material was cured, a 1kg spherical weight was dropped onto the coating layer (A) from a height of 1 m and the evaluation was made based on the following criteria:

a circle indicates that there was no peeling of the coating layer;
a triangle indicates that some peeling and cracks were observed; and
a cross indicates that peeling and cracks were observed throughout the coating layer.

Flexibility (Weight drop impact resistance (Du Pont method))

Test method: Each coating material was coated onto a 25 mm-wide, 1 mm-thick concrete board to a thickness of 15 to 20 μm. According to JIS K 5600, a 500 g weight was dropped from a height of 50 cm to perform a weight drop impact test and the evaluation was made based on the following criteria:

a circle indicates that there was no peeling of the coating layer;
a triangle indicates that some peeling and cracks were observed; and
a cross indicates that peeling and cracks were observed throughout the coating layer.

(Surface resistance)

Each coating was spin-coated onto a glass substrate (dimension = 150 mm × 25 mm × 1 mm thickness) (coating thickness = 10 μm) and according to ASTM D257, the surface resistivity (Ω/sq.) was measured at an applied voltage of 500 V using a high resistivity meter High Rester UP (model MCP-HT450) manufactured by Mitsubishi Chemical Corp.). The resistivity of each sample was the average of the measurements for five substrates (n = 5).
The results are shown in Tables 1 to 15.
[Table 1]

| Table 1 | | | | | | |
|---|---|---|---|---|---|---|
| Components | | Ex. 1 | Ex. 2 | Ex. 3 | Ex. 4 | Ex. 5 |
| (a-1) (i) | CN975 urethane acrylate. Sartomer | | | | | 30 |
| (a-1) (ii) | CN292 polyester acrylate. Sartomer | | | | | |
| (a-1) (iii) | CNUVE151 epoxy acrylate. Sartomer | 30 | 30 | 30 | 30 | |
| (a-1) (iv) | CN963B80 urethane acrylate. Sartomer | | | | | |
| (a-2) | LIGOLAC21 E-A-2. Showa Kobunshi | | | | | |
| (b-1) (i) | N-vinyl caprolactam | 60 | 40 | 40 | 20 | 60 |
| (b-2) (i) | dipropylene glycol diacrylate (DPGDA) | | 20 | | 40 | |
| (b-2) (ii) | tripropylene glycol diacrylate (TPGDA) | | | 20 | | |
| (c-1-2) | Poly bd R-15HT polybutadiene-based polyol | | | | | |
| (c-1-1-1) | URIC AC-006 aromatic castor oil-based polyol | 10 | 10 | 10 | 10 | 10 |
| (c-1-3) | Poly ip polyisoprene-based polyol | | | | | |
| (c-2-1) | URIC H-1262 castor oil-based polyol | | | | | |
| (c-2-1) | URIC H-2151 U castor oil-based polyol | | | | | |
| (c-1-3) | EPOLE hydroxyl-terminated liquid polyolefin | | | | | |
| (c-3-1) | LIR-420 maleic polyisoprene | | | | | |
| (c-3-2) | Ricon130MA8 maleic acid-modified polybutadiene | | | | | |
| (c-3-2) | POLYVEST OC 800 S maleic acid-modified | | | | | |
| (c-1-4) | EPICLON U-125-60BT epoxy polyol | | | | | |

(continued)

| Table 1 | | Ex. 1 | Ex. 2 | Ex. 3 | Ex. 4 | Ex. 5 |
|---|---|---|---|---|---|---|
| Components | | | | | | |
| (c-4-1) | ADEKA RESIN EP-4100E polyepoxy compound | | | | | |
| (c-4-2) | L-207 | | | | | |
| (d) (i) | IRGACURE 819 | 5 | 5 | 5 | 5 | 5 |
| (d) (ii) | PERHEXA 25B | | | | | |
| | Total (Parts by mass) | 105 | 105 | 105 | 105 | 105 |
| | | | | | | |
| Evaluation Results | viscosity mPa·s(25°C) | 1300 | 1600 | 1600 | 1000 | 1050 |
| | pencil hardness (coated concrete board) | H | H | H | H | H |
| | Taber wear property (mg)(coated concrete board) | 50 | 55 | 43 | 63 | 39 |
| | Adhesion Test | | | | | |
| | (B-1) concrete board | 100 | 100 | 100 | 100 | 100 |
| | (B-2) concrete board with urethane-based floor coating | 100 | 100 | 100 | 100 | 100 |
| | (B-3) concrete board with epoxy-based floor coating | 100 | 100 | 100 | 100 | 100 |
| | (B-4) beech wood flooring plywood | 100 | 100 | 100 | 100 | 100 |
| | (B-5) wooden flooring with known urethane-based coating | 100 | 100 | 100 | 100 | 100 |
| | Water resistance test | | | | | |
| | (B-1) concrete board | ○ | ○ | ○ | ○ | ○ |
| | (B-2) concrete board with urethane-based floor coating | ○ | ○ | ○ | ○ | ○ |
| | (B-3) concrete board with epoxy-based floor coating | ○ | ○ | ○ | ○ | ○ |
| | (B-4) beech wood flooring plywood | ○ | ○ | ○ | ○ | ○ |
| | (B-5) wooden flooring with known urethane-based coating | ○ | ○ | ○ | ○ | ○ |
| | Impact resistance test | | | | | |
| | (B-1) concrete board | ○ | ○ | ○ | ○ | ○ |
| | (B-2) concrete board with urethane-based floor coating | ○ | ○ | ○ | ○ | ○ |
| | (B-3) concrete board with epoxy-based floor coating | ○ | ○ | ○ | ○ | ○ |
| | (B-4) beech wood flooring plywood | ○ | ○ | ○ | ○ | ○ |
| | (B-5) wooden flooring with known urethane-based coating | ○ | ○ | ○ | ○ | ○ |
| | Flexibility test | | | | | |
| | (B-1) concrete board | ○ | ○ | ○ | ○ | ○ |

(continued)

| Table 1 | | Ex. 1 | Ex. 2 | Ex. 3 | Ex. 4 | Ex. 5 |
|---|---|---|---|---|---|---|
| Components | | | | | | |
| | (B-2) concrete board with urethane-based floor coating | ○ | ○ | ○ | ○ | ○ |
| | (B-3) concrete board with epoxy-based floor coating | ○ | ○ | ○ | ○ | ○ |
| | (B-4) beech wood flooring plywood | ○ | ○ | ○ | ○ | ○ |
| | (B-5) wooden flooring with known urethane-based coating | ○ | ○ | ○ | ○ | ○ |
| | Surface resistivity (Ω/sq.) | $10^{15}$ | $10^{15}$ | $10^{15}$ | $10^{15}$ | $10^{15}$ |

[Table 2]

| Table 2 | | Example 6 | Example 7 |
|---|---|---|---|
| Components | | | |
| (a-1) (i) | CN975 urethane acrylate, Sartomer | | |
| (a-1) (ii) | CN292 polyester acrylate, Sartomer | | |
| (a-1) (iii) | ICNUVE151 epoxy acrylate. Sartomer | | |
| (a-1) (iv) | CN963B80 urethane acrylate. Sartomer | 30 | 30 |
| (a-2) | LIGOLAC21 E-A-2. Showa Kobunshi | | |
| (b-1) (i) | N-vinyl caprolactam | 30 | 30 |
| (b-2) (i) | dipropylene glycol diacrylate (DPGDA) | 30 | |
| (b-2) (ii) | tripropylene glycol diacrylate (TPGDA) | | 30 |
| (c-1-2) | Poly bd R-15HT polybutadiene-based polyol | | |
| (c-1-1-1) | URIC AC-006 aromatic castor oil-based polyol | 10 | 10 |
| (c-1-3) | Poly ip polyisoprene-based polyol | | |
| (c-2-1) | URIC H-1262 castor oil-based polyol | | |
| (c-2-1) | URIC H-2151 U castor oil-based polyol | | |
| (c-1-3) | EPOLE hydroxyl-terminated liquid polyolefin | | |
| (c-3-1) | LIR-420 maleic polyisoprene | | |
| (c-3-2) | Ricon130MA8 maleic acid-modified polybutadiene | | |
| (c-3-2) | POLYVEST OC 800 S maleic acid-modified | | |
| (c-1-4) | EPICLON U-125-60BT epoxy polyol | | |
| (c-4-1) | ADEKA RESIN EP-4100E polyepoxy compound | | |
| (c-4-2) | L-207 | | |
| (d) (i) | (IRGACURE 819 | 5 | 5 |
| (d) (ii) | PERHEXA 25B | | |
| | Total (Parts by mass) | 105 | 105 |
| (e-1)(i) | Basionic LQ01. BASF | 3.5 | 3.5 |

(continued)

| Table 2 | | Example 6 | Example 7 |
|---|---|---|---|
| Components | | | |
| Evaluation Results | viscosity m+Pa.s(25°C) | 1000 | 1000 |
| | pencil hardness (coated concrete board) | H | H |
| | Taber wear property (coated concrete board) | 69 | 69 |
| | Adhesion Test | | |
| | (B-1) concrete board | 100 | 100 |
| | (B-2) concrete board with urethane-based floor coating | 100 | 100 |
| | (B-3) concrete board with epoxy-based floor coating | 100 | 100 |
| | (B-4) beech wood flooring plywood | 100 | 100 |
| | (B-5) wooden flooring with known urethane-based coating | 100 | 100 |
| | Water resistance test | | |
| | (B-1) concrete board | ○ | ○ |
| | (B-2) concrete board with urethane-based floor coating | ○ | ○ |
| | (B-3) concrete board with epoxy-based floor coating | ○ | ○ |
| | (B-4) beech wood flooring plywood | ○ | ○ |
| | (B-5) wooden flooring with known urethane-based coating | ○ | ○ |
| | Impact resistance test | | |
| | (B-1) concrete board | ○ | ○ |
| | (B-2) concrete board with urethane-based floor coating | ○ | ○ |
| | (B-3) concrete board with epoxy-based floor coating | ○ | ○ |
| | (B-4) beech wood flooring plywood | ○ | ○ |
| | (B-5) wooden flooring with known urethane-based coating | ○ | ○ |
| | Flexibility test | | |
| | (B-1) concrete board | ○ | ○ |
| | (B-2) concrete board with urethane-based floor coating | ○ | ○ |
| | (B-3) concrete board with epoxy-based floor coating | ○ | ○ |
| | (B-4) beech wood flooring plywood | ○ | ○ |
| | (B-5) wooden flooring with known urethane-based coating | ○ | ○ |
| | Surface resistivity (Ω/sq.) | $10^8$ | $10^8$ |

[Table 3]

| Table 3 | | Ex. 8 | Ex. 9 | Ex. 10 | Ex. 11 | Ex. 12 |
|---|---|---|---|---|---|---|
| Components | | | | | | |
| (a-1) (i) | CN975 urethane acrylate. Sartomer | | | | | |
| (a-1) (ii) | CN292 polyester acrylate. Sartomer | 30 | | | | |
| (a-1) (iii) | ICNUVE151 epoxy acrylate. Sartomer | | | 30 | 30 | 30 |
| (a-1) (iv) | CN963B80 urethane acrylate. Sartomer | | 30 | | | |

(continued)

| Table 3 | | Ex. 8 | Ex. 9 | Ex. 10 | Ex. 11 | Ex. 12 |
|---|---|---|---|---|---|---|
| Components | | | | | | |
| (a-2) | LIGOLAC21E-A-2, Showa Kobunshi | | | | | |
| (b-1) (i) | N-vinylcaprolactam | 60 | 60 | 60 | 60 | 60 |
| (b-2) (i) | dipropylene glycol diacrylate (DPGDA) | | | | | |
| (b-2) (ii) | tripropylene glycol diacrylate (TPGDA) | | | | | |
| (c-1-2) | Poly bd R-15HT polybutadiene-based polyol | | | | | |
| (c-1-1-1) | URIC AC-006 aromatic castor oil-based polyol | 10 | 10 | | | |
| (c-1-3) | Poly ip polyisoprene-based polyol | | | 10 | | |
| (c-2-1) | URIC H-1262 castor oil-based polyol | | | | 10 | |
| (c-2-1) | URIC H-2151 U castor oil-based polyol | | | | | 10 |
| (c-1-3) | EPOLE hydroxyl-terminated liquid polyolefin | | | | | |
| (c-3-1) | LIR-420 maleic polyisoprene | | | | | |
| (c-3-2) | Ricon130MA8 maleic acid-modified polybutadiene | | | | | |
| (c-3-2) | POLYVEST OC 800 S maleic acid-modified | | | | | |
| (c-1-4) | EPICLON U-125-60BT epoxy polyol | | | | | |
| (c-4-1) | ADEKA RESIN EP-4100E polyepoxy compound | | | | | |
| (c-4-2) | L-207 | | | | | |
| (d) (i) | (IRGACURE 819 | 5 | 5 | 5 | 5 | 5 |
| (d) (ii) | PERHEXA 25B | | | | | |
| | Total (Parts by mass) | 105 | 105 | 105 | 105 | 105 |
| (e-1) (i) | Basionic LQ01. BASF | 3.5 | 3.5 | 3.5 | 3.5 | 3.5 |
| Evaluation Results | viscosity mPa.s(25°C) | 340 | 1350 | 1350 | 1400 | 1380 |
| | pencil hardness (coated concrete board) | H | H | H | H | H |
| | Taber wear property (coated concrete board) | 49 | 41 | 51 | 46 | 64 |
| | Adhesion Test | | | | | |
| | (B-1) concrete board | 100 | 100 | 100 | 100 | 100 |
| | (B-2) concrete board with urethane-based floor coating | 100 | 100 | 100 | 100 | 100 |
| | (B-3) concrete board with epoxy-based floor coating | 100 | 100 | 100 | 100 | 100 |
| | (B-4) beech wood flooring plywood | 100 | 100 | 100 | 100 | 100 |
| | (B-5) wooden flooring with known urethane-based coating | 100 | 100 | 100 | 100 | 100 |
| | Water resistance test | | | | | |
| | (B-1) concrete board | ○ | ○ | ○ | ○ | ○ |

(continued)

| Table 3 | | Ex. 8 | Ex. 9 | Ex. 10 | Ex. 11 | Ex. 12 |
|---|---|---|---|---|---|---|
| Components | | | | | | |
| | (B-2) concrete board with urethane-based floor coating | ○ | ○ | ○ | ○ | ○ |
| | (B-3) concrete board with epoxy-based floor coating | ○ | ○ | ○ | ○ | ○ |
| | (B-4) beech wood flooring plywood | ○ | ○ | ○ | ○ | ○ |
| | (B-5) wooden flooring with known urethane-based coating | ○ | ○ | ○ | ○ | ○ |
| | Impact resistance test | | | | | |
| | (B-1) concrete board | ○ | ○ | ○ | ○ | ○ |
| | (B-2) concrete board with urethane-based floor coating | ○ | ○ | ○ | ○ | ○ |
| | (B-3) concrete board with epoxy-based floor coating | ○ | ○ | ○ | ○ | ○ |
| | (B-4) beech wood flooring plywood | ○ | ○ | ○ | ○ | ○ |
| | (B-5) wooden flooring with known urethane-based coating | ○ | ○ | ○ | ○ | ○ |
| | Flexibility test | | | | | |
| | (B-1) concrete board | ○ | ○ | ○ | ○ | ○ |
| | (B-2) concrete board with urethane-based floor coating | ○ | ○ | ○ | ○ | ○ |
| | (B-3) concrete board with epoxy-based floor coating | ○ | ○ | ○ | ○ | ○ |
| | (B-4) beech wood flooring plywood | ○ | ○ | ○ | ○ | ○ |
| | (B-5) wooden flooring with known urethane-based coating | ○ | ○ | ○ | ○ | ○ |
| | Surface resistivity (Ω/sq.) | $10^8$ | $10^8$ | $10^8$ | $10^8$ | $10^8$ |

[Table 4]

| Table 4 | | Ex. 13 | Ex. 14 | Ex. 15 | Ex. 16 | Ex. 17 |
|---|---|---|---|---|---|---|
| Components | | | | | | |
| (a-1) (i) | CN975 urethane acrylate, Sartomer | | | | | |
| (a-1) (ii) | CN292 polyester acrylate, Sartomer | | | | | |
| (a-1) (iii) | ICNUVE151 epoxy acrylate, Sartomer | 30 | 30 | 30 | 30 | 30 |
| (a-1) (iv) | CN963B80 urethane acrylate. Sartomer | | | | | |
| (a-2) | LIGOLAC21E-A-2. Showa Kobunshi | | | | | |
| (b-1) (i) | N-vinyl caprolactam | 60 | 60 | 60 | 60 | 60 |
| (b-2) (i) | dipropylene glycol diacrylate (DPGDA) | | | | | |
| (b-2) (ii) | tripropylene glycol diacrylate (TPGDA) | | | | | |

(continued)

| Table 4 | | | | | | |
|---|---|---|---|---|---|---|
| Components | | Ex. 13 | Ex. 14 | Ex. 15 | Ex. 16 | Ex. 17 |
| (c-1-2) | Poly bd R-15HT polybutadiene-based polyol | | | | | |
| (c-1-1-1) | URIC AC-006 aromatic castor oil-based polyol | | | | | |
| (c-1-3) | Poly ip polyisoprene-based polyol | | | | | |
| (c-2-1) | URIC H-1262 castor oil-based polyol | | | | | |
| (c-2-1) | URIC H-2151 U castor oil-based polyol | | | | | |
| (c-1-3) | EPOLE hydroxyl-terminated liquid polyolefin | 10 | | | | |
| (c-3-1) | LIR-420 maleic polyisoprene | | 10 | | | |
| (c-3-2) | Ricon130MA8 maleic acid-modified polybutadiene | | | 10 | | |
| (c-3-2) | POLYVEST OC 800 S maleic acid-modified | | | | 10 | |
| (c-1-4) | EPICLON U-125-60BT epoxy polyol | | | | | 10 |
| (c-4-1) | ADEKA RESIN EP-4100E polyepoxy compound | | | | | |
| (c-4-2) | L-207 | | | | | |
| (d) (i) | (IRGACURE 819 | 5 | 5 | 5 | 5 | 5 |
| (d) (ii) | PERHEXA 25B | | | | | |
| | Total (Parts by mass) | 105 | 105 | 105 | 105 | 105 |
| (e-1) (i) | Basionic LQ01. BASF | 3.5 | 3.5 | 3.5 | 3.5 | 3.5 |
| Evaluation Results | viscosity mPa.s(25°C) | 1350 | 1350 | 1400 | 1350 | 1350 |
| | pencil hardness (coated concrete board) | H | H | H | H | H |
| | Taber wear property (coated concrete board) | 81 | 66 | 71 | 81 | 71 |
| | Adhesion Test | | | | | |
| | (B-1) concrete board | 100 | 100 | 100 | 100 | 100 |
| | (B-2) concrete board with urethane-based floor coating | 100 | 100 | 100 | 100 | 100 |
| | (B-3) concrete board with epoxy-based floor coating | 100 | 100 | 100 | 100 | 100 |
| | (B-4) beech wood flooring plywood | 100 | 100 | 100 | 100 | 100 |
| | (B-5) wooden flooring with known urethane-based coating | 100 | 100 | 100 | 100 | 100 |
| | Water resistance test | | | | | |
| | (B-1) concrete board | ○ | ○ | ○ | ○ | ○ |
| | (B-2) concrete board with urethane-based floor coating | ○ | ○ | ○ | ○ | ○ |
| | (B-3) concrete board with epoxy-based floor coating | ○ | ○ | ○ | ○ | ○ |

(continued)

| Table 4 | | | | | | |
|---|---|---|---|---|---|---|
| Components | | Ex. 13 | Ex. 14 | Ex. 15 | Ex. 16 | Ex. 17 |
| | (B-4) beech wood flooring plywood | ○ | ○ | ○ | ○ | ○ |
| | (B-5) wooden flooring with known urethane-based coating | ○ | ○ | ○ | ○ | ○ |
| | Impact resistance test | | | | | |
| | (B-1) concrete board | ○ | ○ | ○ | ○ | ○ |
| | (B-2) concrete board with urethane-based floor coating | ○ | ○ | ○ | ○ | ○ |
| | (B-3) concrete board with epoxy-based floor coating | ○ | ○ | ○ | ○ | ○ |
| | (B-4) beech wood flooring plywood | ○ | ○ | ○ | ○ | ○ |
| | (B-5) wooden flooring with known urethane-based coating | ○ | ○ | ○ | ○ | ○ |
| | Flexibility test | | | | | |
| | (B-1) concrete board | ○ | ○ | ○ | ○ | ○ |
| | (B-2) concrete board with urethane-based floor coating | ○ | ○ | ○ | ○ | ○ |
| | (B-3) concrete board with epoxy-based floor coating | ○ | ○ | ○ | ○ | ○ |
| | (B-4) beech wood flooring plywood | ○ | ○ | ○ | ○ | ○ |
| | (B-5) wooden flooring with known urethane-based coating | ○ | ○ | ○ | ○ | ○ |
| | Surface resistivity (Ω/sq.) | $10^8$ | $10^8$ | $10^8$ | $10^8$ | $10^8$ |

[Table 5]

| Table 5 | | | | | |
|---|---|---|---|---|---|
| Components | | Ex. 18 | Ex. 19 | Ex. 20 | Ex. 21 |
| (a-1) (i) | CN975 urethane acrylate, Sartomer | | | | |
| (a-1) (ii) | CN292 polyester acrylate, Sartomer | | | | |
| (a-1) (iii) | CNUVE151 epoxy acrylate, Sartomer | 30 | 30 | 30 | |
| (a-1) (iv) | CN963B80 urethane acrylate, Sartomer | | | | |
| (a-2) | LIGOLAC21E-A-2. Showa Kobunshi | | | | 30 |
| (b-1) (i) | N-vinyl caprolactam | 60 | 60 | 60 | 60 |
| (b-2) (i) | dipropylene glycol diacrylate (DPGDA) | | | | |
| (b-2) (ii) | tripropylene glycol diacrylate (TPGDA) | | | | |
| (c-1-2) | Poly bd R-15HT polybutadiene-based polyol | | | | |
| (c-1-1-1) | URIC AC-006 aromatic castor oil-based polyol | | | 10 | 10 |
| (c-1-3) | Poly ip polyisoprene-based polyol | | | | |
| (c-2-1) | URIC H-1262 castor oil-based polyol | | | | |

(continued)

| Table 5 | | | | | |
|---|---|---|---|---|---|
| Components | | Ex. 18 | Ex. 19 | Ex. 20 | Ex. 21 |
| (c-2-1) | URIC H-2151 U castor oil-based polyol | | | | |
| (c-1-3) | EPOLE hydroxyl-terminated liquid polyolefin | | | | |
| (c-3-1) | LIR-420 maleic polyisoprene | | | | |
| (c-3-2) | Ricon130MA8 maleic acid-modified polybutadiene | | | | |
| (c-3-2) | POLYVEST OC 800 S maleic acid-modified | | | | |
| (c-1-4) | EPICLON U-125-60BT epoxy polyol | | | | |
| (c-4-1) | ADEKA RESIN EP-4100E polyepoxy compound | 10 | | | |
| (c-4-2) | L-207 | | 10 | | |
| (d) (i) | IRGACURE 819 | 5 | 5 | | 5 |
| (d) (ii) | PERHEXA 25B | | | 0.3 | |
| | Total (Parts by mass) | 105 | 105 | 100 | 105 |
| (e-1) (i) | Basionic LQ01, BASF | 3.5 | 3.5 | 3.5 | 3.5 |
| Evaluation Results | viscosity mPa.s(25°C) | 1300 | 1400 | 1250 | 1580 |
| | pencil hardness (coated concrete board) | H | H | H | H |
| | Taber wear property (coated concrete board) | 71 | 66 | 76 | 81 |
| | Adhesion Test | | | | |
| | (B-1) concrete board | 100 | 100 | 100 | 100 |
| | (B-2) concrete board with urethane-based floor coating | 100 | 100 | 100 | 100 |
| | (B-3) concrete board with epoxy-based floor coating | 100 | 100 | 100 | 100 |
| | (B-4) beech wood flooring plywood | 100 | 100 | 100 | 100 |
| | (B-5) wooden flooring with known urethane-based coating | 100 | 100 | 100 | 100 |
| | Water resistance test | | | | |
| | (B-1) concrete board | ○ | ○ | ○ | ○ |
| | (B-2) concrete board with urethane-based floor coating | ○ | ○ | ○ | ○ |
| | (B-3) concrete board with epoxy-based floor coating | ○ | ○ | ○ | ○ |
| | (B-4) beech wood flooring plywood | ○ | ○ | ○ | ○ |
| | (B-5) wooden flooring with known urethane-based coating | ○ | ○ | ○ | ○ |
| | Impact resistance test | | | | |
| | (B-1) concrete board | ○ | ○ | ○ | ○ |
| | (B-2) concrete board with urethane-based floor coating | ○ | ○ | ○ | ○ |
| | (B-3) concrete board with epoxy-based floor coating | ○ | ○ | ○ | ○ |
| | (B-4) beech wood flooring plywood | ○ | ○ | ○ | ○ |
| | (B-5) wooden flooring with known urethane-based coating | ○ | ○ | ○ | ○ |

(continued)

| Table 5 | | | | | |
|---|---|---|---|---|---|
| Components | | Ex. 18 | Ex. 19 | Ex. 20 | Ex. 21 |
| | Flexibility test | | | | |
| | (B-1) concrete board | ○ | ○ | ○ | ○ |
| | (B-2) concrete board with urethane-based floor coating | ○ | ○ | ○ | ○ |
| | (B-3) concrete board with epoxy-based floor coating | ○ | ○ | ○ | ○ |
| | (B-4) beech wood flooring plywood | ○ | ○ | ○ | ○ |
| | (B-5) wooden flooring with known urethane-based coating | ○ | ○ | ○ | ○ |
| | Surface resistivity (Ω/sq.) | $10^8$ | $10^8$ | $10^8$ | $10^8$ |

[Table 6]

| Table 6 | | | | | |
|---|---|---|---|---|---|
| Components | | Comp. Ex. 1 | Comp. Ex. 2 | Comp. Ex. 3 | Comp. Ex. 4 |
| (a-1) (i) | CN975 urethane acrylate, Sartomer | | | | |
| (a-1) (ii) | CN292 polyester acrylate, Sartomer | | | | |
| (a-1) (iii) | CNUVE151 epoxy acrylate, Sartomer | 15 | 45 | 35 | 25 |
| (a-1) (iv) | CN963B80 urethane acrylate, Sartomer | | | | |
| (a-2) | LIGOLAC21E-A-2. Showa Kobunshi | | | | |
| (b-1) (i) | N-vinyl caprolactam | 75 | 45 | 65 | 50 |
| (b-2) (i) | dipropylene glycol diacrylate (DPGDA) | | | | |
| (b-2) (ii) | tripropylene glycol diacrylate (TPGDA) | | | | |
| (c-1-2) | Poly bd R-15HT polybutadiene-based polyol | | | | |
| (c-1-1-1) | URIC AC-006 aromatic castor oil-based polyol | 10 | 10 | | 25 |
| (c-1-3) | Poly ip polyisoprene-based polyol | | | | |
| (c-2-1) | URIC H-1262 castor oil-based polyol | | | | |
| (c-2-1) | URIC H-2151 U castor oil-based polyol | | | | |
| (c-1-3) | EPOLE hydroxyl-terminated liquid polyolefin | | | | |

(continued)

| Table 6 | | | | | |
|---|---|---|---|---|---|
| Components | | Comp. Ex. 1 | Comp. Ex. 2 | Comp. Ex. 3 | Comp. Ex. 4 |
| (c-3-1) | LIR-420 maleic polyisoprene | | | | |
| (c-3-2) | Ricon130MA8 maleic acid-modified polybutadiene | | | | |
| (c-3-2) | POLYVEST OC 800 S maleic acid-modified | | | | |
| (c-1-4) | EPICLON U-125-60BT epoxy polyol | | | | |
| (c-4-1) | ADEKA RESIN EP-4100E polyepoxy compound | | | | |
| (c-4-2) | L-207 | | | | |
| (d) (i) | IRGACURE 819 | 5 | 5 | 5 | 5 |
| (d) (ii) | PERHEXA 25B | | | | |
| | Total (Parts by mass) | 105 | 105 | 105 | 105 |
| (e-1) (i) | Basionic LQ01, BASF | 3.5 | 3.5 | 3.5 | 3.5 |
| Evaluation Results | viscosity mPa.s(25°C) | 600 | 1500 | 1050 | 1120 |
| | pencil hardness (coated concrete board) | H | F | H | B |
| | Taber wear property (coated concrete board) | 82 | 93 | 92 | 150 |
| | Adhesion Test | | | | |
| | (B-1) concrete board | 33 | 56 | 44 | 44 |
| | (B-2) concrete board with urethane-based floor coating | 56 | 56 | 56 | 56 |
| | (B-3) concrete board with epoxy-based floor coating | 39 | 56 | 33 | 50 |
| | (B-4) beech wood flooring plywood | 56 | 56 | 56 | 56 |
| | (B-5) wooden flooring with known urethane-based coating | 56 | 56 | 56 | 56 |
| | Water resistance test | | | | |
| | (B-1) concrete board | × | Δ | Δ | × |
| | (B-2) concrete board with urethane-based floor coating | × | Δ | Δ | × |
| | (B-3) concrete board with epoxy-based floor coating | × | Δ | Δ | × |
| | (B-4) beech wood flooring plywood | × | Δ | Δ | × |
| | (B-5) wooden flooring with known urethane-based coating | × | Δ | Δ | × |
| | Impact resistance test | | | | |
| | (B-1) concrete board | × | Δ | × | ○ |

(continued)

| Table 6 | | Comp. Ex. 1 | Comp. Ex. 2 | Comp. Ex. 3 | Comp. Ex. 4 |
|---|---|---|---|---|---|
| Components | | | | | |
| | (B-2) concrete board with urethane-based floor coating | × | Δ | × | ○ |
| | (B-3) concrete board with epoxy-based floor coating | × | Δ | × | ○ |
| | (B-4) beech wood flooring plywood | × | Δ | × | ○ |
| | (B-5) wooden flooring with known urethane-based coating | × | Δ | × | ○ |
| | Flexibility test | | | | |
| | (B-1) concrete board | × | Δ | × | ○ |
| | (B-2) concrete board with urethane-based floor coating | × | Δ | × | ○ |
| | (B-3) concrete board with epoxy-based floor coating | × | Δ | × | ○ |
| | (B-4) beech wood flooring plywood | × | Δ | × | ○ |
| | (B-5) wooden flooring with known urethane-based coating | × | Δ | × | ○ |
| | Surface resistivity (/sq.) | $10^8$ | $10^8$ | $10^8$ | $10^8$ |

[Table 7]

| Table 7 | | Comp. Ex. 5 | Comp. Ex. 6 |
|---|---|---|---|
| Components | | | |
| (a-1) (i) | CN975 urethane acrylate, Sartomer | | |
| (a-1) (ii) | CN292 polyester acrylate, Sartomer | | |
| (a-1) (iii) | CNUVE151 epoxy acrylate, Sartomer | 30 | 30 |
| (a-1) (iv) | CN963B80 urethane acrylate, Sartomer | | |
| (a-2) | LIGOLAC21E-A-2. Showa Kobunshi | | |
| (b-1) (i) | N-vinyl caprolactam | 60 | 60 |
| (b-2) (i) | dipropylene glycol diacrylate (DPGDA) | | |
| (b-2) (ii) | tripropylene glycol diacrylate (TPGDA) | | |
| (c-1-2) | Poly bd R-15HT polybutadiene-based polyol | | |
| (c-1-1-1) | URIC AC-006 aromatic castor oil-based polyol | 10 | 10 |
| (c-1-3) | Poly ip polyisoprene-based polyol | | |
| (c-2-1) | URIC H-1262 castor oil-based polyol | | |
| (c-2-1) | URIC H-2151 U castor oil-based polyol | | |
| (c-1-3) | EPOLE hydroxyl-terminated liquid polyolefin | | |
| (c-3-1) | LIR-420 maleic polyisoprene | | |

(continued)

| Table 7 | | Comp. Ex. 5 | Comp. Ex. 6 |
|---|---|---|---|
| Components | | | |
| (c-3-2) | Ricon130MA8 maleic acid-modified polybutadiene | | |
| (c-3-2) | POLYVEST OC 800 S maleic acid-modified | | |
| (c-1-4) | EPICLON U-125-60BT epoxy polyol | | |
| (c-4-1) | ADEKA RESIN EP-4100E polyepoxy compound | | |
| (c-4-2) | L-207 | | |
| (d) (i) | IRGACURE 819 | 0.05 | 20 |
| (d) (ii) | PERHEXA 25B | | |
| | Total (Parts by mass) | 100.05 | 120 |
| (e-1) (i) | Basionic LQ01. BASF | 3.5 | 3.5 |
| Evaluation Results | viscosity mPa.s(25°C) | 1050 | 1050 |
| | pencil hardness (coated concrete board) | - | H |
| | Taber wear property (coated concrete board) | - | 89 |
| | Adhesion Test | | |
| | (B-1) concrete board | - | 47 |
| | (B-2) concrete board with urethane-based floor coating | - | 56 |
| | (B-3) concrete board with epoxy-based floor coating | - | 47 |
| | (B-4) beech wood flooring plywood | - | 56 |
| | (B-5) wooden flooring with known urethane-based coating | - | 56 |
| | Water resistance test | | |
| | (B-1) concrete board | - | × |
| | (B-2) concrete board with urethane-based floor coating | - | × |
| | (B-3) concrete board with epoxy-based floor coating | - | × |
| | (B-4) beech wood flooring plywood | - | × |
| | (B-5) wooden flooring with known urethane-based coating | - | × |
| | Impact resistance test | | |
| | (B-1) concrete board | - | × |
| | (B-2) concrete board with urethane-based floor coating | - | × |
| | (B-3) concrete board with epoxy-based floor coating | - | × |
| | (B-4) beech wood flooring plywood | - | × |
| | (B-5) wooden flooring with known urethane-based coating | - | × |
| | Flexibility test | | |
| | (B-1) concrete board | - | × |
| | (B-2) concrete board with urethane-based floor coating | - | × |
| | (B-3) concrete board with epoxy-based floor coating | - | × |
| | (B-4) beech wood flooring plywood | - | × |
| | (B-5) wooden flooring with known urethane-based coating | - | × |
| | Surface resistivity (Ω/sq.) | - | $10^8$ |

[Table 8]

| Table 8 | | Ex. 22 | Ex. 23 | Ex. 24 |
|---|---|---|---|---|
| Components | | | | |
| (a-1) (i) | CN975 urethane acrylate, Sartomer | | | |
| (a-1) (ii) | CN292 polyester acrylate, Sartomer | | | |
| (a-1) (iii) | CNUVE151 epoxy acrylate, Sartomer | 30 | 30 | 30 |
| (a-1) (iv) | CN963B80 urethane acrylate, Sartomer | | | |
| (a-2) | LIGOLAC21E-A-2. Showa Kobunshi | | | |
| (b-1) (i) | N-vinyl caprolactam | 60 | 60 | 60 |
| (b-2) (i) | dipropylene glycol diacrylate (DPGDA) | | | |
| (b-2) (ii) | tripropylene glycol diacrylate (TPGDA) | | | |
| (c-1-2) | Poly bd R-15HT polybutadiene-based polyol | | | |
| (c-1-1-1) | URIC AC-006 aromatic castor oil-based polyol | 10 | 10 | 10 |
| (c-1-3) | Poly ip polyisoprene-based polyol | | | |
| (c-2-1) | URIC H-1262 castor oil-based polyol | | | |
| (c-2-1) | URIC H-2151 U castor oil-based polyol | | | |
| (c-1-3) | EPOLE hydroxyl-terminated liquid polyolefin | | | |
| (c-3-1) | LIR-420 maleic polyisoprene | | | |
| (c-3-2) | Ricon130MA8 maleic acid-modified polybutadiene | | | |
| (c-3-2) | POLYVEST OC 800 S maleic acid-modified | | | |
| (c-1-4) | EPICLON U-125-60BT epoxy polyol | | | |
| (c-4-1) | ADEKA RESIN EP-4100E polyepoxy compound | | | |
| (c-4-2) | L-207 | | | |
| (d) (i) | IRGACURE 819 | 5 | 5 | 5 |
| (d) (ii) | PERHEXA 25B | | | |
| | Total (Parts by mass) | 105 | 105 | 105 |
| (e-1) (i) | Basionic LQ01, BASF | 3.5 | 5 | 7.5 |
| Evaluation Results | viscosity mPa.s(25°C) | | | |
| | pencil hardness (coated concrete board) | H | H | H |
| | Taber wear property (coated concrete board) | 50 | 52 | 53 |
| | Adhesion Test | | | |
| | (B-1) concrete board | 100 | 100 | 100 |
| | (B-2) concrete board with urethane-based floor coating | 100 | 100 | 100 |
| | (B-3) concrete board with epoxy-based floor coating | 100 | 100 | 100 |
| | (B-4) beech wood flooring plywood | 100 | 100 | 100 |
| | (B-5) wooden flooring with known urethane-based coating | 100 | 100 | 100 |
| | Water resistance test | | | |
| | (B-1) concrete board | ○ | ○ | ○ |
| | (B-2) concrete board with urethane-based floor coating | ○ | ○ | ○ |

(continued)

| Table 8 | | | | |
|---|---|---|---|---|
| Components | | Ex. 22 | Ex. 23 | Ex. 24 |
| | (B-3) concrete board with epoxy-based floor coating | ○ | ○ | ○ |
| | (B-4) beech wood flooring plywood | ○ | ○ | ○ |
| | (B-5) wooden flooring with known urethane-based coating | ○ | ○ | ○ |
| | Impact resistance test | | | |
| | (B-1) concrete board | ○ | ○ | ○ |
| | (B-2) concrete board with urethane-based floor coating | ○ | ○ | ○ |
| | (B-3) concrete board with epoxy-based floor coating | ○ | ○ | ○ |
| | (B-4) beech wood flooring plywood | ○ | ○ | ○ |
| | (B-5) wooden flooring with known urethane-based coating | ○ | ○ | ○ |
| | Flexibility test | | | |
| | (B-1) concrete board | ○ | ○ | ○ |
| | (B-2) concrete board with urethane-based floor coating | ○ | ○ | ○ |
| | (B-3) concrete board with epoxy-based floor coating | ○ | ○ | ○ |
| | (B-4) beech wood flooring plywood | ○ | ○ | ○ |
| | (B-5) wooden flooring with known urethane-based coating | ○ | ○ | ○ |
| | Surface resistivity (/sq.) | $10^8$ | $10^8$ | $10^7$ |

[Table 9]

| Table 9 | | | | |
|---|---|---|---|---|
| Components | | Ex. 25 | Ex. 26 | Ex. 27 |
| (a-1) (i) | CN975 urethane acrylate, Sartomer | | | |
| (a-1) (ii) | CN292 polyester acrylate, Sartomer | | | |
| (a-1) (iii) | CNUVE151 epoxy acrylate, Sartomer | 30 | 30 | 30 |
| (a-1) (iv) | CN963B80 urethane acrylate, Sartomer | | | |
| (a-2) | LIGOLAC21E-A-2. Showa Kobunshi | | | |
| (b-1) (i) | N-vinyl caprolactam | 60 | 60 | 60 |
| (b-2) (i) | dipropylene glycol diacrylate (DPGDA) | | | |
| (b-2) (ii) | tripropylene glycol diacrylate (TPGDA) | | | |
| (c-1-2) | Poly bd R-15HT polybutadiene-based polyol | | | |
| (c-1-1-1) | URIC AC-006 aromatic castor oil-based polyol | | | |
| (c-1-3) | Poly ip polyisoprene-based polyol | | | |
| (c-2-1) | URIC H-1262 castor oil-based polyol | 10 | | |
| (c-2-1) | URIC H-2151 U castor oil-based polyol | | | |
| (c-1-3) | EPOLE hydroxyl-terminated liquid polyolefin | | | |
| (c-3-1) | LIR-420 maleic polyisoprene | | | |
| (c-3-2) | Ricon130MA8 maleic acid-modified polybutadiene | | | |

(continued)

| Table 9 | | | | |
|---|---|---|---|---|
| Components | | Ex. 25 | Ex. 26 | Ex. 27 |
| (c-3-2) | POLYVEST OC 800 S maleic acid-modified | | 10 | |
| (c-1-4) | EPICLON U-125-60BT epoxy polyol | | | |
| (c-4-1) | ADEKA RESIN EP-4100E polyepoxy compound | | | 10 |
| (c-4-2) | L-207 | | | |
| (d) (i) | IRGACURE 819 | 5 | 5 | 5 |
| (d) (ii) | PERHEXA 25B | | | |
| | Total (Parts by mass) | 105 | 105 | 105 |
| (e-1) (i) | Basionic LQ01, BASF | 3.5 | 5 | 7.5 |
| Evaluation Results | viscosity mPa.s(25°C) | | | |
| | pencil hardness (coated concrete board) | H | H | H |
| | Taber wear property (coated concrete board) | 50 | 55 | 58 |
| | Adhesion Test | | | |
| | (B-1) concrete board | 100 | 100 | 100 |
| | (B-2) concrete board with urethane-based floor coating | 100 | 100 | 100 |
| | (B-3) concrete board with epoxy-based floor coating | 100 | 100 | 100 |
| | (B-4) beech wood flooring plywood | 100 | 100 | 100 |
| | (B-5) wooden flooring with known urethane-based coating | 100 | 100 | 100 |
| | Water resistance test | | | |
| | (B-1) concrete board | ○ | ○ | ○ |
| | (B-2) concrete board with urethane-based floor coating | ○ | ○ | ○ |
| | (B-3) concrete board with epoxy-based floor coating | ○ | ○ | ○ |
| | (B-4) beech wood flooring plywood | ○ | ○ | ○ |
| | (B-5) wooden flooring with known urethane-based coating | ○ | ○ | ○ |
| | Impact resistance test | | | |
| | (B-1) concrete board | ○ | ○ | ○ |
| | (B-2) concrete board with urethane-based floor coating | ○ | ○ | ○ |
| | (B-3) concrete board with epoxy-based floor coating | ○ | ○ | ○ |
| | (B-4) beech wood flooring plywood | ○ | ○ | ○ |
| | (B-5) wooden flooring with known urethane-based coating | ○ | ○ | ○ |
| | Flexibility test | | | |
| | (B-1) concrete board | ○ | ○ | ○ |
| | (B-2) concrete board with urethane-based floor coating | ○ | ○ | ○ |
| | (B-3) concrete board with epoxy-based floor coating | ○ | ○ | ○ |
| | (B-4) beech wood flooring plywood | ○ | ○ | ○ |
| | (B-5) wooden flooring with known urethane-based coating | ○ | ○ | ○ |
| | Surface resistivity (/sq.) | $10^8$ | $10^8$ | $10^7$ |

[Table 10]

| Table 10 | | Ex. 28 | Ex. 29 | Ex. 30 |
|---|---|---|---|---|
| Components | | | | |
| (a-1) (i) | CN975 urethane acrylate, Sartomer | | | |
| (a-1) (ii) | CN292 polyester acrylate, Sartomer | | | |
| (a-1) (iii) | CNUVE151 epoxy acrylate. Sartomer | 30 | 30 | 30 |
| (a-1) (iv) | CN963B80 urethane acrylate, Sartomer | | | |
| (a-2) | LIGOLAC21E-A-2. Showa Kobunshi | | | |
| (b-1) (i) | N-vinyl caprolactam | 60 | 60 | 60 |
| (b-2) (i) | dipropylene glycol diacrylate (DPGDA) | | | |
| (b-2) (ii) | tripropylene glycol diacrylate (TPGDA) | | | |
| (c-1-2) | Poly bd R-15HT polybutadiene-based polyol | | | |
| (c-1-1-1) | URIC AC-006 aromatic castor oil-based polyol | 10 | 10 | 10 |
| (c-1-3) | Poly ip polyisoprene-based polyol | | | |
| (c-2-1) | URIC H-1262 castor oil-based polyol | | | |
| (c-2-1) | URIC H-2151 U castor oil-based polyol | | | |
| (c-1-3) | EPOLE hydroxyl-terminated liquid polyolefin | | | |
| (c-3-1) | LIR-420 maleic polyisoprene | | | |
| (c-3-2) | Ricon130MA8 maleic acid-modified polybutadiene | | | |
| (c-3-2) | POLYVEST OC 800 S maleic acid-modified | | | |
| (c-1-4) | EPICLON U-125-60BT epoxy polyol | | | |
| (c-4-1) | ADEKA RESIN EP-4100E polyepoxy compound | | | |
| (c-4-2) | L-207 | | | |
| (d) (i) | IRGACURE 819 | 5 | 5 | 5 |
| (d) (ii) | PERHEXA 25B | | | |
| | Total (Parts bv mass) | 105 | 105 | 105 |
| (e-1) (i) | Basionic LQ01, BASF | 3.5 | 5 | 7.5 |
| (f-1) (i) | ADEKA STAB AX-71 | 0.2 | 0.2 | 0.2 |
| Evaluation Results | viscosity mPa.s(25°C) | | | |
| | pencil hardness (coated concrete board) | H | H | H |
| | Taber wear property (coated concrete board) | 58 | 62 | 65 |
| | Adhesion Test | | | |
| | (B-1) concrete board | 100 | 100 | 100 |
| | (B-2) concrete board with urethane-based floor coating | 100 | 100 | 100 |
| | (B-3) concrete board with epoxy-based floor coating | 100 | 100 | 100 |
| | (B-4) beech wood flooring plywood | 100 | 100 | 100 |
| | (B-5) wooden flooring with known urethane-based coating | 100 | 100 | 100 |
| | Water resistance test | | | |

(continued)

| | | | | |
|---|---|---|---|---|
| | (B-1) concrete board | ○ | ○ | ○ |
| | (B-2) concrete board with urethane-based floor coating | ○ | ○ | ○ |
| | (B-3) concrete board with epoxy-based floor coating | ○ | ○ | ○ |
| | (B-4) beech wood flooring plywood | ○ | ○ | ○ |
| | (B-5) wooden flooring with known urethane-based coating | ○ | ○ | ○ |
| | Impact resistance test | | | |
| | (B-1) concrete board | ○ | ○ | ○ |
| | (B-2) concrete board with urethane-based floor coating | ○ | ○ | ○ |
| | (B-3) concrete board with epoxy-based floor coating | ○ | ○ | ○ |
| | (B-4) beech wood flooring plywood | ○ | ○ | ○ |
| | (B-5) wooden flooring with known urethane-based coating | ○ | ○ | ○ |
| | Flexibility test | | | |
| | (B-1) concrete board | ○ | ○ | ○ |
| | (B-2) concrete board with urethane-based floor coating | ○ | ○ | ○ |
| | (B-3) concrete board with epoxy-based floor coating | ○ | ○ | ○ |
| | (B-4) beech wood flooring plywood | ○ | ○ | ○ |
| | (B-5) wooden flooring with known urethane-based coating | ○ | ○ | ○ |
| | Surface resistivity (Ω/sq.) | $10^7$ | $10^7$ | $10^6$ |

[Table 11]

| Table 11 | | | | |
|---|---|---|---|---|
| Components | | Ex. 31 | Ex. 32 | Ex. 33 |
| (a-1) (i) | CN975 urethane acrylate, Sartomer | | | |
| (a-1) (ii) | CN292 polyester acrylate, Sartomer | | | |
| (a-1) (iii) | CNUVE151 epoxy acrylate, Sartomer | 30 | 30 | 30 |
| (a-1) (iv) | CN963B80 urethane acrylate, Sartomer | | | |
| (a-2) | LIGOLAC21 E-A-2. Showa Kobunshi | | | |
| (b-1) (i) | N-vinyl caprolactam | 40 | 30 | 60 |
| (b-2) (i) | dipropylene glycol diacrylate (DPGDA) | | | |
| (b-2) (ii) | tripropylene glycol diacrylate (TPGDA) | | | |
| (b-3) | trimethylolpropane triacrylate | 20 | 30 | |
| (c-1-2) | Poly bd R-15HT polybutadiene-based polyol | | | 10 |
| (c-1-1-1) | URIC AC-006 aromatic castor oil-based polyol | 10 | 10 | |
| (c-1-3) | Poly ip polyisoprene-based polyol | | | |
| (c-2-1) | URIC H-1262 castor oil-based polyol | | | |
| (c-2-1) | URIC H-2151 U castor oil-based polyol | | | |
| (c-1-3) | EPOLE hydroxyl-terminated liquid polyolefin | | | |
| (c-3-1) | LIR-420 maleic polyisoprene | | | |

(continued)

| Table 11 | | | | |
|---|---|---|---|---|
| Components | | Ex. 31 | Ex. 32 | Ex. 33 |
| (c-3-2) | Ricon130MA8 maleic acid-modified polybutadiene | | | |
| (c-3-2) | POLYVEST OC 800 S maleic acid-modified | | | |
| (c-1-4) | EPICLON U-125-60BT epoxy polyol | | | |
| (c-4-1) | ADEKA RESIN EP-4100E polyepoxy compound | | | |
| (c-4-2) | L-207 | | | |
| (d) (i) | IRGACURE 819 | 5 | 5 | 5 |
| (d) (ii) | PERHEXA 25B | | | |
| | Total (Parts bv mass) | 105 | 105 | 105 |
| | | | | |
| Evaluation Results | viscosity mPa.s(25°C) | 1600 | 1250 | 1300 |
| | pencil hardness (coated concrete board) | 2H | 2H | H |
| | Taber wear property (coated concrete board) | 45 | 40 | 50 |
| | Adhesion Test | | | |
| | (B-1) concrete board | 100 | 100 | 100 |
| | (B-2) concrete board with urethane-based floor coating | 100 | 100 | 100 |
| | (B-3) concrete board with epoxy-based floor coating | 100 | 100 | 100 |
| | (B-4) beech wood flooring plywood | 100 | 100 | 100 |
| | (B-5) wooden flooring with known urethane-based coating | 100 | 100 | 100 |
| | Water resistance test | | | |
| | (B-1) concrete board | ○ | ○ | ○ |
| | (B-2) concrete board with urethane-based floor coating | ○ | ○ | ○ |
| | (B-3) concrete board with epoxy-based floor coating | ○ | ○ | ○ |
| | (B-4) beech wood flooring plywood | ○ | ○ | ○ |
| | (B-5) wooden flooring with known urethane-based coating | ○ | ○ | ○ |
| | Impact resistance test | | | |
| | (B-1) concrete board | ○ | ○ | ○ |
| | (B-2) concrete board with urethane-based floor coating | ○ | ○ | ○ |
| | (B-3) concrete board with epoxy-based floor coating | ○ | ○ | ○ |
| | (B-4) beech wood flooring plywood | ○ | ○ | ○ |
| | (B-5) wooden flooring with known urethane-based coating | ○ | ○ | ○ |
| | Flexibility test | | | |
| | (B-1) concrete board | ○ | ○ | ○ |
| | (B-2) concrete board with urethane-based floor coating | ○ | ○ | ○ |

(continued)

| | | | | |
|---|---|---|---|---|
| | Flexibility test | | | |
| | (B-3) concrete board with epoxy-based floor coasting | ○ | ○ | ○ |
| | (B-4) beech wood flooring plywood | ○ | ○ | ○ |
| | (B-5) wooden flooring with known urethane-based coating | ○ | ○ | ○ |
| | Surface resistivity (Ω/sq.) | $10^{15}$ | $10^{15}$ | $10^{15}$ |

[Table 12]

| Table 12 | | | | | |
|---|---|---|---|---|---|
| Components | | Ex. 34 | Ex. 35 | Ex. 36 | Ex. 37 |
| (a-1) (i) | CN975 urethane acrylate, Sartomer | | | | |
| (a-1) (ii) | CN292 polyester acrylate, Sartomer | | | | |
| (a-1) (iii) | CNUVE151 epoxy acrylate, Sartomer | 30 | 30 | 30 | 30 |
| (a-1) (iv) | CN963B80 urethane acrylate, Sartomer | | | | |
| (a-2) | LIGOLAC21 E-A-2. Showa Kobunshi | | | | |
| (b-1) (i) | N-vinyl caprolactam | 60 | 60 | 60 | 60 |
| (b-2) (i) | dipropylene glycol diacrylate (DPGDA) | | | | |
| (b-2) (ii) | tripropylene glycol diacrylate (TPGDA) | | | | |
| (c-1-2) | Poly R-15HI polybutadiene-based polyol | | | | |
| (c-1-1-1) | URIC AC-006 aromatic castor oil-based polyol | 10 | 10 | 10 | 10 |
| (c-1-3) | Poly ip polyisoprene-based polyol | | | | |
| (c-2-1) | URIC H-1262 castor oil-based polyol | | | | |
| (c-2-1) | URIC H-2151U castor oil-based polyol | | | | |
| (c-1-3) | EPOLE hydroxyl-terminated liquid polyolefin | | | | |
| (c-3-1) | LIR-420 maleic polyisoprene | | | | |
| (c-3-2) | Ricon130MA8 maleic acid-modified polybutadiene | | | | |
| (c-3-2) | POLYVEST OC 800 S maleic acid-modified | | | | |
| (c-1-4) | EPICLON U-125-60BT epoxy polyol | | | | |
| (c-4-1) | ADEKA RESIN LP-4100E polyepoxy compound | | | | |
| (c-4-2) | L-207 | | | | |
| (d) (i) | IRGACURE 819 | 5 | 5 | 5 | 5 |
| (d) (ii) | PERHEXA 25B | | | | |
| | Total (Parts by mass) | 105 | 105 | 105 | 105 |
| (e-1 )(i) | Basionic LQ01, BASF | | | 3.5 | 3.b |
| (e-1) (ii) | BASF社製、 Basionic AC 09 | 3.5 | | | |
| (e-1) (iii) | BASF 社製、 Basionic VS 01 | | 3.5 | | |
| (f-1) (i) | ADEKA STAB AX-71 | | | | |
| (f-1) (ii) | monolauryl phophoric acid. Daihachi Chemical | | | 0.2 | |

(continued)

| Table 12 | | Ex. 34 | Ex. 35 | Ex. 36 | Ex. 37 |
|---|---|---|---|---|---|
| Components | | | | | |
| (f-2) | CARBODILYTE V-05. Nisshinbo Chemical | | | | 0.2 |
| Evaluation Results | viscosity mPa.s(25°C) | 1200 | 1200 | 1200 | 1200 |
| | pencil hardness (coated concrete board) | H | H | H | H |
| | Taber wear property (coated concrete board) | 60 | 55 | 55 | 55 |
| | Adhesion Test | | | | |
| | (B-1) concrete board | 100 | 100 | 100 | 100 |
| | (B-2) concrete board with urethane-based floor coating | 100 | 100 | 100 | 100 |
| | (B-3) concrete board with epoxy-based floor coating | 100 | 100 | 100 | 100 |
| | (B-4) beech wood flooring plywood | 100 | 100 | 100 | 100 |
| | (B-5) wooden flooring with known urethane-based coating | 100 | 100 | 100 | 100 |
| | Water resistance test | | | | |
| | (B-1) concrete board | ○ | ○ | ○ | ○ |
| | (B-2) concrete board with urethane-based floor coating | ○ | ○ | ○ | ○ |
| | (B-3) concrete board with epoxy-based floor coating | ○ | ○ | ○ | ○ |
| | (B-4) beech wood flooring plywood | ○ | ○ | ○ | ○ |
| | wooden flooring with known urethane-based coating | ○ | ○ | ○ | ○ |
| | Impact resistance test | | | | |
| | (B-1) concrete board | ○ | ○ | ○ | ○ |
| | (B-2) concrete board with urethane-based floor coating | ○ | ○ | ○ | ○ |
| | (B-3) concrete board with epoxy-based floor coating | ○ | ○ | ○ | ○ |
| | (B-4) beech wood flooring plywood | ○ | ○ | ○ | ○ |
| | (B-5) wooden flooring with known urethane-based coating | ○ | ○ | ○ | ○ |
| | Flexibility test | | | | |
| | (B-1) concrete board | ○ | ○ | ○ | ○ |
| | (B-2) concrete board with urethane-based floor coating | ○ | ○ | ○ | ○ |
| | (B-3) concrete board with epoxy-based floor coating | ○ | ○ | ○ | ○ |
| | (B-4) beech wood flooring plywood | ○ | ○ | ○ | ○ |
| | (B-5) wooden flooring with known urethane-based coating | ○ | ○ | ○ | ○ |

(continued)

| | | | | | |
|---|---|---|---|---|---|
| | Flexibility test | | | | |
| | Surface resistivity (Ω/sq.) | $10^8$ | $10^8$ | $10^7$ | $10^7$ |

[Table 13]

| Table 13 | | | | | |
|---|---|---|---|---|---|
| Components | | Ex. 38 | Ex. 39 | Ex. 40 | Ex. 41 |
| (a-1) (i) | CN975 urethane acrylate, Sartomer | | | | |
| (a-1) (ii) | CN292 polyester acrylate, Sartomer | | | | |
| (a-1) (iii) | CNUVE151 epoxy acrylate, Sartomer | 30 | 30 | 30 | 30 |
| (a-1) (iv) | CN963B80 urethane acrylate, Sartomer | | | | |
| (a-2) | LIGOLAC21 E-A-2. Showa Kobunshi | | | | |
| (b-1) (i) | N-vinyl caprolactam | 60 | 60 | 60 | 60 |
| (b-2) (i) | dipropylene glycol diacrylate (DPGDA) | | | | |
| (b-2) (ii) | tripropylene glycol diacrylate (TPGDA) | | | | |
| (c-1-2) | Poly bd R-15HT polybutadiene-based polyol | | | | |
| (c-1-1-1) | URIC AC-006 aromatic castor oil-based polyol | 10 | 10 | 10 | 10 |
| (c-1-3) | Poly ip polyisoprene-based polyol | | | | |
| (c-2-1) | URIC H-1262 castor oil-based polyol | | | | |
| (c-2-1) | URIC H-2151U castor oil-based polyol | | | | |
| (c-1-3) | EPOLE hydroxyl-terminated liquid polyolefin | | | | |
| (c-3-1) | LIR-420 maleic polyisoprene | | | | |
| (c-3-2) | Ricon130MA8 maleic acid-modified polybutadiene | | | | |
| (c-3-2) | POLYVEST OC 800 S maleic acid-modified polybutadiene | | | | |
| (c-1-4) | EPICLON U-125-60BT epoxy polyol | | | | |
| (c-4-1) | ADEKA RESIN EP-4100E polyepoxy compound | | | | |
| (c-4-2) | L-207 | | | | |
| (d) (i) | IRGACURE 819 | 5 | 5 | 5 | 5 |
| (d) (ii) | PERHEXA 25B | | | | |
| | Total (Parts by mass) | 105 | 105 | 105 | 105 |
| (e-1) (i) | Basionic LQ01. BASF | | 3.5 | 3.5 | 3.5 |
| (e-1) (iv) | TMAC-100(tetramethylammonium chloride), Lion Akzo | 3.5 | | | |
| (f-1) (i) | ADEKA STAB AX-71 | | | | 0.2 |
| (f-1) (ii) | monolauryl phophoric acid. Daihachi Chemical | | | | |
| (f-2) | CARBODILYTE V-05. Nisshinbo Chemical | | | | |
| (f-3) (i) | DVE-3 triethylene glycol divinyl ether, BASF | | 0.2 | | 0.2 |
| (f-3) (ii) | 1,4-cyclohexanedimethanol divinyl ether (CHDM), BASF | | | 0.2 | |

(continued)

| Table 13 | | Ex. 38 | Ex. 39 | Ex. 40 | Ex. 41 |
|---|---|---|---|---|---|
| Components | | | | | |
| Evaluation Results | viscosity mPa.s(25°C) | 1200 | 1200 | 1200 | 1200 |
| | pencil hardness (coated concrete board) | H | H | H | H |
| | Taber wear property (coated concrete board) | 55 | 55 | 55 | 55 |
| | Adhesion Test | | | | |
| | (B-1) concrete board | 100 | 100 | 100 | 100 |
| | (B-2) concrete board with urethane-based floor coating | 100 | 100 | 100 | 100 |
| | (B-3) concrete board with epoxy-based floor coating | 100 | 100 | 100 | 100 |
| | (B-4) beech wood flooring plywood | 100 | 100 | 100 | 100 |
| | (B-5) wooden flooring with known urethane-based coating | 100 | 100 | 100 | 100 |
| | Water resistance test | | | | |
| | (B-1) concrete board | ○ | ○ | ○ | ○ |
| | (B-2) concrete board with urethane-based floor coating | ○ | ○ | ○ | ○ |
| | (B-3) concrete board with epoxy-based floor coating | ○ | ○ | ○ | ○ |
| | (B-4) beech wood flooring plywood | ○ | ○ | ○ | ○ |
| | (B-5) wooden flooring with known urethane-based coating | ○ | ○ | ○ | ○ |
| | Impact resistance test | | | | |
| | (B-1) concrete board | ○ | ○ | ○ | ○ |
| | (B-2) concrete board with urethane-based floor coating | ○ | ○ | ○ | ○ |
| | (B-3) concrete board with epoxy-based floor coating | ○ | ○ | ○ | ○ |
| | (B-4) beech wood flooring plywood | ○ | ○ | ○ | ○ |
| | (B-5) wooden flooring with known urethane-based coating | ○ | ○ | ○ | ○ |
| | Flexibility test | | | | |
| | (B-1) concrete board | ○ | ○ | ○ | ○ |
| | (B-2) concrete board with urethane-based floor coating | ○ | ○ | ○ | ○ |
| | (B-3) concrete board with epoxy-based floor coating | ○ | ○ | ○ | ○ |
| | (B-4) beech wood flooring plywood | ○ | ○ | ○ | ○ |
| | (B-5) wooden flooring with known urethane-based coating | ○ | ○ | ○ | ○ |
| | (Surface resistivity (Ω/sq.) | $10^{11}$ | $10^{6}$ | $10^{6}$ | $10^{7}$ |

[Table 14]

| Table 14 | | | | | | |
|---|---|---|---|---|---|---|
| Components | | Ex. 42 | Ex. 43 | Ex. 44 | Ex. 45 | Ex. 46 |
| (a-1) (i) | CN975 urethane acrylate, Sartomer | | | | | |
| (a-1) (ii) | CN292 polyester acrvlate. Sartomer | | | | | |
| (a-1) (iii) | CNUVE151 epoxy acrylate, Sartomer | 30 | 30 | 30 | 30 | 30 |
| (a-1) (iv) | CN963B80 urethane acrvlate. Sartomer | | | | | |
| (a-2) | LIGOLAC21 E-A-2. Showa Kobunshi | | | | | |
| (b-1) (i) | N-vinyl caprolactam | 60 | 60 | 60 | 60 | 60 |
| (b-2) (i) | dipropylene glycol diacrylate (DPGDA) | | | | | |
| (b-2) (ii) | tripropylene glycol diacrylate (TPGDA) | | | | | |
| (c-1-2) | Poly bd R-15HT polybutadiene-based polyol | | | | | |
| (c-1-1-1) | URIC AC-006 aromatic castor oil-based polyol | 10 | 10 | 10 | 10 | 10 |
| (c-1-3) | Poly ip polyisoprene-based polyol | | | | | |
| (c-2-1) | URIC H-1262 castor oil-based polyol | | | | | |
| (c-2-1) | URIC H-2151 U castor oil-based polyol | | | | | |
| (c-1-3) | EPOLE hydroxyl-terminated liquid polyolefin | | | | | |
| (c-3-1) | LIR-420 maleic polyisoprene | | | | | |
| (c-3-2) | Ricon130MA8 maleic acid-modified polybutadiene | | | | | |
| (c-3-2) | POLYVEST OC 800 S maleic acid-modified polybutadiene | | | | | |
| (c-1-4) | EPICLON U-125-60BT epoxy polyol | | | | | |
| (c-4-1) | ADEKA RESIN EP-4100E polyepoxy compound | | | | | |
| (c-4-2) | L-207 | | | | | |
| (d) (i) | IRGACURE 819 | 5 | 5 | 5 | 5 | 5 |
| (d) (ii) | PERHEXA 25B | | | | | |
| | Total (Parts by mass) | 105 | 105 | 105 | 105 | 105 |
| (e-1) (i) | Basionic LQ01. BASF | 3.5 | 3.5 | 3.5 | 3.5 | 3.5 |
| (e-1) (iv) | TMAC-100(tetramethylammonium chloride), Lion Akzo | | | | | |
| (f-1) (i) | ADEKA STAB AX-71 | | | 0.2 | | |
| (f-1) (ii) | monolauryl phophoric acid. Daihachi Chemical | 0.2 | | | 0.2 | |
| (f-2) | CARBODILYTE V-05. Nisshinbo Chemical | | 0.2 | | | 0.2 |
| (f-3) b(i) | DVE-3 triethylene glycol divinyl ether, BASF | 0.2 | 0.2 | | | |
| (f-3) (ii) | 1,4-cyclohexanedimethanol divinyl ether (CHDM), BASF | | | 0.2 | 0.2 | 0.2 |

(continued)

| Table 14 | | | | | | |
|---|---|---|---|---|---|---|
| Components | | Ex. 42 | Ex. 43 | Ex. 44 | Ex. 45 | Ex. 46 |
| Evaluation Results | viscosity mPa.s(25°C) | 1200 | 1200 | 1200 | 1200 | 1200 |
| | pencil hardness (coated concrete board) | H | H | H | H | H |
| | Taber wear property (coated concrete board) | 55 | 55 | 55 | 55 | 55 |
| | Adhesion Test | | | | | |
| | (B-1) concrete board | 100 | 100 | 100 | 100 | 100 |
| | (B-2) concrete board with urethane-based floor coating | 100 | 100 | 100 | 100 | 100 |
| | (B-3) concrete board with epoxy-based floor coating | 100 | 100 | 100 | 100 | 100 |
| | (B-4) beech wood flooring plywood | 100 | 100 | 100 | 100 | 100 |
| | (B-5) wooden flooring with known urethane-based coating | 100 | 100 | 100 | 100 | 100 |
| | Water resistance test | | | | | |
| | (B-1) concrete board | ○ | ○ | ○ | ○ | ○ |
| | (B-2) concrete board with urethane-based floor coating | ○ | ○ | ○ | ○ | ○ |
| | (B-3) concrete board with epoxy-based floor coating | ○ | ○ | ○ | ○ | ○ |
| | (B-4) beech wood flooring plywood | ○ | ○ | ○ | ○ | ○ |
| | (B-5) wooden flooring with known urethane-based coating | ○ | ○ | ○ | ○ | ○ |
| | Impact resistance test | | | | | |
| | (B-1) concrete board | ○ | ○ | ○ | ○ | ○ |
| | (B-2) concrete board with urethane-based floor coating | ○ | ○ | ○ | ○ | ○ |
| | (B-3) concrete board with epoxy-based floor coating | ○ | ○ | ○ | ○ | ○ |
| | (B-4) beech wood flooring plywood | ○ | ○ | ○ | ○ | ○ |
| | (B-5) wooden flooring with known urethane-based coating | ○ | ○ | ○ | ○ | ○ |
| | Flexibility test | | | | | |
| | (B-1) concrete board | ○ | ○ | ○ | ○ | ○ |
| | (B-2) concrete board with urethane-based floor coating | ○ | ○ | ○ | ○ | ○ |
| | (B-3) concrete board with epoxy-based floor coating | ○ | ○ | ○ | ○ | ○ |

(continued)

| | | | | | | |
|---|---|---|---|---|---|---|
| | Flexibility test | | | | | |
| | (B-4) beech wood flooring plywood | ○ | ○ | ○ | ○ | ○ |
| | (B-5) wooden flooring with known urethane-based coating | ○ | ○ | ○ | ○ | ○ |
| | Surface resistivity (Ω/sq.) | $10^7$ | $10^7$ | $10^7$ | $10^7$ | $10^7$ |

[Table 15]

| Table 15 | | | | | | |
|---|---|---|---|---|---|---|
| Components | | Ex. 47 | Ex. 48 | Ex. 49 | Ex. 50 | Ex. 51 |
| (a-1) (i) | CN975 urethane acrylate, Sartomer | | | | | |
| (a-1) (ii) | CN292 polyester acrylate, Sartomer | | | | | |
| (a-1) (iii) | CNUVE151 epoxy acrylate, Sartomer | 30 | | 30 | 30 | 30 |
| (a-1) (iv) | CN963B80 urethane acrylate, Sartomer | | 30 | | | |
| (a-2) | LIGOLAC21 E-A-2. Showa Kobunshi | | | | | |
| (b-1) (i) | N-vinyl caprolactam | 40 | 30 | 40 | 40 | 40 |
| (b-2) (i) | dipropylene glycol diacrylate (DPGDA) | | | | | |
| (b-2) (ii) | tripropylene glycol diacrylate (TPGDA) | | | | | |
| (b-2) (iii) | 1,6-hexanediol diacrylate | 20 | 30 | 20 | 20 | 20 |
| (c-1-2) | Poly bd R-15HT polybutadiene-based polyol | | | | | |
| (c-1-1-1) | URIC AC-006 aromatic castor oil-based polyol | 10 | 10 | 10 | 10 | 10 |
| (c-1-3) | Poly ip polyisoprene-based polyol | | | | | |
| (c-2-1) | URIC H-1262 castor oil-based polyol | | | | | |
| (c-2-1) | URIC H-2151U castor oil-based polyol | | | | | |
| (c-1-3) | EPOLE hydroxyl-terminated liquid polyolefin | | | | | |
| (c-3-1) | LIR-420 maleic polyisoprene | | | | | |
| (c-3-2) | Ricon130MA8 maleic acid-modified polybutadiene | | | | | |
| (c-3-2) | POLYVEST OC 800 S maleic acid-modified polybutadiene | | | | | |
| (c-1-4) | EPICLON U-125-60BT epoxy polyol | | | | | |
| (c-4-1) | ADEKA RESIN EP-4100E polyepoxy compound | | | | | |
| (c-4-2) | L-207 | | | | | |
| (d) (i) | IRGACURE 819 | 5 | 5 | 5 | 5 | 5 |
| (d) (ii) | PERHEXA 25B | | | | | |
| | Total (Parts bv mass) | 105 | 105 | 105 | 105 | 105 |
| (e-1) (i) | Basionic LQ01. BASF | 3.5 | 3.5 | 3.5 | 3.5 | 3.5 |

(continued)

| Table 15 | | Ex. 47 | Ex. 48 | Ex. 49 | Ex. 50 | Ex. 51 |
|---|---|---|---|---|---|---|
| Components | | | | | | |
| (e-1) (iv) | TMAC-100(tetramethylammonium chloride), Lion Akzo | | | | | |
| (f-1) (i) | ADEKA STAB AX-71 | | | 0.2 | 0.2 | 0.2 |
| (f-1) (ii) | monolauryl phophoric acid. Daihachi Chemical | | | | | |
| (f-2) | CARBODILYTE V-05. Nisshinbo Chemical | | | | | |
| (f-3) (i) | DVE-3 triethylene glycol divinyl ether, BASF | | | | 0.2 | |
| (f-3) (ii) | 1,4-cyclohexanedimethanol divinyl ether (CHDM), BASF | | | | | 0.2 |
| Evaluation Results | viscosity mPa.s(25°C) | 1500 | 1000 | 1350 | 1400 | 1400 |
| | pencil hardness (coated concrete board) | H | H | H | H | H |
| | Taber wear property (coated concrete board) | 53 | 65 | 62 | 65 | 68 |
| | Adhesion Test | | | | | |
| | (B-1) concrete board | 100 | 100 | 100 | 100 | 100 |
| | (B-2) concrete board with urethane-based floor coating | 100 | 100 | 100 | 100 | 100 |
| | (B-3) concrete board with epoxy-based floor coating | 100 | 100 | 100 | 100 | 100 |
| | (B-4) beech wood flooring plywood | 100 | 100 | 100 | 100 | 100 |
| | (B-5) wooden flooring with known urethane-based coating | 100 | 100 | 100 | 100 | 100 |
| | Water resistance test | | | | | |
| | (B-1) concrete board | ○ | ○ | ○ | ○ | ○ |
| | (B-2) concrete board with urethane-based floor coating | ○ | ○ | ○ | ○ | ○ |
| | (B-3) concrete board with epoxy-based floor coating | ○ | ○ | ○ | ○ | ○ |
| | (B-4) beech wood flooring plywood | ○ | ○ | ○ | ○ | ○ |
| | (B-5) wooden flooring with known urethane-based coating | ○ | ○ | ○ | ○ | ○ |
| | Impact resistance test | | | | | |
| | (B-1) concrete board | ○ | ○ | ○ | ○ | ○ |
| | (B-2) concrete board with urethane-based floor coating | ○ | ○ | ○ | ○ | ○ |
| | (B-3) concrete board with epoxy-based floor coating | ○ | ○ | ○ | ○ | ○ |
| | (B-4) beech wood flooring plywood | ○ | ○ | ○ | ○ | ○ |

(continued)

| | | | | | | |
|---|---|---|---|---|---|---|
| | Impact resistance test | | | | | |
| | (B-5) wooden flooring with known urethane-based coating | ○ | ○ | ○ | ○ | ○ |
| | Flexibility test | | | | | |
| | (B-1) concrete board | ○ | ○ | ○ | ○ | ○ |
| | (B-2) concrete board with urethane-based floor coating | ○ | ○ | ○ | ○ | ○ |
| | (B-3) concrete board with epoxy-based floor coating | ○ | ○ | ○ | ○ | ○ |
| | (B-4) beech wood flooring plywood | ○ | ○ | ○ | ○ | ○ |
| | (B-5) wooden flooring with known urethane-based coating | ○ | ○ | ○ | ○ | ○ |
| | Surface resistivity (Ω/sq.) | $10^8$ | $10^8$ | $10^8$ | $10^7$ | $10^7$ |

Referring to the results of Examples shown in the tables above, the coating material of each of Examples, which contains the above-described specific components (a) to (d) in the above-specified amounts, exhibits high adhesion to the floor base layer for floors such as concrete floors, resin-coated concrete floors, wooden floors or resin-coated wooden floors and provides high water resistance, wear resistance, transparency, surface smoothness, flexibility and impact resistance. The coating material also has an appropriate viscosity, which eliminates the need to dilute the coating material with organic solvents and thus will not lead to worsening of working conditions.
Comparative Example 1, in which the amount of the component (a) was less than the lower limit specified in the present invention and the amount of the component (b) was greater than the upper limit specified in the present invention, showed a reduced adhesion and a tendency to become brittle, resulting in unfavorable Taber wear property. The water resistance, impact resistance and flexibility were also low.
Comparative Example 2, in which the amount of the component (a) is greater than the lower limit specified in the present invention and the amount of the component (b) is less than the upper limit specified in the present invention, showed a reduced adhesion and showed a decrease in the Taber wear property and water resistance. The surface smoothness was also low.
Comparative Example 3, which did not contain the component (c), showed a tendency to become brittle, thus resulting in unfavorable Taber wear property. The adhesion, water resistance, impact resistance and flexibility were also low.
Comparative Example 4, in which the amount of the component (c) was greater than the upper limit specified in the present invention, showed excessive contraction and, thus, a reduced water resistance. The adhesion was also low, as were the total light transmittance and the surface hardness.
Comparative Example 5, in which the amount of the component (d) was less than the lower limit specified in the present invention, resulted in incomplete curing.
Comparative Example 6, in which the amount of the component (d) was greater than the upper limit specified in the present invention, showed excessive contraction and, thus, a reduced water resistance. The adhesion, impact resistance and flexibility were also low.
Similarly favorable results were obtained as in Examples when the coating materials of the present invention were tested at a coating thickness of 5 μm.

## Claims

**1.** A floor coating material, comprising:

(a) 20 to 40 % by mass of a vinyl ester resin or an unsaturated polyester resin;
(b) 50 to 70 % by mass of a vinyl monomer and/or a (meth)acrylate monomer;
(c) 1 to 20 % by mass of a modifying agent (provided that the total amount of the components (a) to (c) is 100 % by mass); and
(d) 0.1 to 15 parts by mass of at least one radical polymerization initiator selected from the group consisting of organic peroxides, UV initiators and electron-beam initiators, with respect to 100 parts by mass of the total

amount of the components (a) to (c).

2. The floor coating material according to claim 1, wherein the component (a) comprises at least one selected from the group consisting of urethane (meth) acrylate, polyester (meth) acrylate and epoxy(meth)acrylate.

3. The floor coating material according to claim 1 or 2, wherein the component (b) comprises at least one monomer selected from (b-1) a compound having a cyclic structure and having a single ethylenic unsaturated group; (b-2) a diacrylate compound; and (b-3) a triacrylate compound.

4. The floor coating material according to any of claims 1 to 3, wherein the component (c) comprises at least one selected from the group consisting of (c-1) a polyol having a hydroxyl value of 40 to 330 mg KOH/g; (c-2) a polyol having a hydroxyl value of 40 to 330 mg KOH/g and an acid value of 2 to 20 mg KOH/g; (c-3) a modified rubber; and (c-4) a compound having an epoxy equivalent of 150 to 700 g/mol.

5. The floor coating material according to claim 4, wherein the component (c-1) comprises at least one selected from the group consisting of (c-1-1) a castor oil-based polyol having a hydroxyl value of 40 to 330 mg KOH; (c-1-2) a polybutadiene-based polyol having a hydroxyl value of 40 to 330 mg KOH/g; and (c-1-3) a polyisoprene-based polyol having a hydroxyl value of 40 to 330 mg KOH/g or a hydrogenated product thereof.

6. The floor coating material according to claim 5, wherein the component (c-1) comprises (c-1-1-1) an aromatic castor oil-based polyol having a hydroxyl value of 40 to 330 mg KOH/g.

7. The floor coating material according to claim 4, wherein the component (c-2) comprises (c-2-1) a castor oil-based polyol having a hydroxyl value of 40 to 330 mg KOH/g and an acid value of 2 to 20 mg KOH/g.

8. The floor coating material according to claim 4, wherein the component (c-3) comprises an acid-modified polybutadiene or an acid-modified polyisoprene.

9. The floor coating material according to claim 4, wherein the component (c-4) comprises (c-4-1) a polyepoxy compound having an epoxy equivalent of 150 to 250 g/mol.

10. The floor coating material according to claim 4, wherein the component (c-4) comprises (c-4-2) a polymer with a saturated backbone having an epoxy equivalent of 500 to 700 g/mol.

11. The floor coating material according to any of claims 1 to 10, further comprising (e) an antistatic material.

12. The floor coating material according to claim 11, wherein the antistatic material (e) comprises (e-1) an ionic liquid, wherein the ionic liquid (e-1) is added in an amount of 0.5 to 10.0 parts by mass with respect to 100 parts by mass of the total amount of the component (a) to (c).

13. The floor coating material according to claim 12, wherein the ionic liquid (e-1) comprises at least one cation selected from the group consisting of imidazolium, pyridinium, pyrrolidinium, phosphonium, ammonium and sulfonium.

14. The floor coating material according to claim 13, wherein the ionic liquid (e-1) comprises an anion selected from the group consisting of halogens, carboxylates, sulfates, sulfonates, thiocyanates, aluminates, borates, phosphates, phosphinates, amides, antimonates, imides and methides.

15. The floor coating material according to any of claims 12 to 14, further comprising (f) an antistatic improver, wherein the antistatic improver (f) comprises at least one selected from the group consisting of (f-1) an acidic phosphate; (f-2) a carbodiimide compound; and (f-3) a vinyl ether-based compound and is added in an amount in the range of 0.02 to 30 parts by mass with respect to one part by mass of the ionic liquid (e-1).

16. The floor coating material according to any of the claims 1 to 15, wherein the flooring to be coated with the coating material comprises a concrete floor, a resin-coated concrete floor, a wooden floor or a resin-coated wooden floor.

17. A flooring formed of a coating layer (A) placed adjacent to a floor base layer (B), wherein the coating layer (A) comprises:

(a) 20 to 40 % by mass of a vinyl ester resin or an unsaturated polyester resin;
(b) 50 to 70 % by mass of a vinyl monomer and/or a (meth)acrylate monomer;
(c) 1 to 20 % by mass of a modifying agent (provided that the total amount of the components (a) to (c) is 100 % by mass); and
(d) 0.1 to 15 parts by mass of at least one radical polymerization initiator selected from the group consisting of organic peroxides, UV initiators and electron-beam initiators, with respect to 100 parts by mass of the total amount of the components (a) to (c), and

wherein the floor base layer (B) comprises a concrete floor, a resin-coated concrete floor, a wooden floor or a resin-coated wooden floor.

**18.** The flooring according to claim 17, wherein the coating layer (A) has a thickness of 20 to 1,000 μm.

**19.** The flooring according to claim 17 or 18, wherein the coating layer (A) further comprises (e) an antistatic material.

**20.** The flooring according to claim 19, wherein the antistatic material (e) comprises (e-1) an ionic liquid, wherein the ionic liquid (e-1) is added in an amount of 0.5 to 10.0 parts by mass with respect to 100 parts by mass of the total amount of the component (a) to (c).

**21.** The flooring according to claim 20, wherein the ionic liquid (e-1) comprises at least one cation selected from the group consisting of imidazolium, pyridinium, pyrrolidinium, phosphonium, ammonium and sulfonium.

**22.** The flooring according to claim 21, wherein the ionic liquid (e-1) comprises an anion selected from the group consisting of halogens, carboxylates, sulfates, sulfonates, thiocyanates, aluminates, borates, phosphates, phosphinates, amides, antimonates, imides and methides.

**23.** The flooring according to any of claims 20 to 22, wherein further comprising an antistatic improver (f), wherein the antistatic improver (f) comprises at least one selected from the group consisting of (f-1) an acidic phosphate; and (f-2) a carbodiimide compound, wherein the antistatic improver is added in an amount in the range of 0.02 to 30 parts by mass with respect to one part by mass of the ionic liquid (e-1).

## INTERNATIONAL SEARCH REPORT

International application No.
PCT/JP2010/065028

A. CLASSIFICATION OF SUBJECT MATTER
*C09D4/00*(2006.01)i, *B32B13/12*(2006.01)i, *B32B21/08*(2006.01)i, *B32B27/30*(2006.01)i, *B32B27/36*(2006.01)i, *C09D5/24*(2006.01)i, *C09D7/12*(2006.01)i, *C09D167/07*(2006.01)i, *E04F15/12*(2006.01)i
According to International Patent Classification (IPC) or to both national classification and IPC

B. FIELDS SEARCHED
Minimum documentation searched (classification system followed by classification symbols)
C09D4/00, B32B13/12, B32B21/08, B32B27/30, B32B27/36, C09D5/24, C09D7/12, C09D167/07, E04F15/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-348194 A (JSR Corp.), 28 December 2006 (28.12.2006), claims 1, 5; paragraphs [0001], [0013], [0027], [0034], [0050]; example 1 (Family: none) | 1-11,16-19<br>12-15,20-23 |
| Y<br>A | JP 2009-102525 A (Japan Carlit Co., Ltd.), 14 May 2009 (14.05.2009), claims 1, 12, 15; paragraphs [0002], [0054] (Family: none) | 12-15,20-23<br>1-11,16-19 |
| Y<br>A | JP 2009-221287 A (Sanyo Chemical Industries, Ltd.), 01 October 2009 (01.10.2009), claim 1; examples 1, 2; comparative examples 1, 2 (Family: none) | 15,23<br>1-14,16-22 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>26 November, 2010 (26.11.10) | Date of mailing of the international search report<br>07 December, 2010 (07.12.10) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2010/065028

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | WO 2009/050957 A1 (JSR Corp.),<br>23 April 2009 (23.04.2009),<br>claim 1; example 1; paragraph [0068]<br>(Family: none) | 1-11,16-19<br>12-15,20-23 |
| A | JP 08-253707 A (Chugoku Marine Paints, Ltd.),<br>01 October 1996 (01.10.1996),<br>entire text<br>(Family: none) | 1-23 |
| A | JP 2005-272564 A (Dainippon Ink And Chemicals, Inc.),<br>06 October 2005 (06.10.2005),<br>entire text<br>(Family: none) | 1-23 |
| A | JP 2009-068016 A (DIC Corp.),<br>02 April 2009 (02.04.2009),<br>entire text<br>(Family: none) | 1-23 |
| A | JP 2001-240631 A (Mitsui Chemicals, Inc.),<br>04 September 2001 (04.09.2001),<br>entire text<br>(Family: none) | 1-23 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000256612 A
- JP 2002363485 A
- JP 2005089712 A